# EUROPEAN PATENT APPLICATION

(11) **EP 4 694 283 A1**
(43) Date of publication of application: **11.02.2026**
(21) Application number: 23931569.0
(22) Date of filing: 07.04.2023
(51) Int. Cl.: H04W 24/02

(54) **METHOD AND APPARATUS FOR DATA TRANSMISSION, STORAGE MEDIUM, COMMUNICATION DEVICE, AND COMMUNICATION SYSTEM**

(71) Applicant: Beijing Xiaomi Mobile Software Co., Ltd., Beijing 100085 (CN)
(72) Inventor: LIU, Xiaofei, Beijing 100085 (CN); LI, Yanhua, Beijing 100085 (CN); LIU, Jianning, Beijing 100085 (CN)
(74) Representative: Dehns Germany Partnerschaft mbB
(86) International application number: PCT/CN2023/087093
(87) International publication number: WO 2024/207508

(57) **Abstract**

Disclosed are a method and apparatus for data transmission, a storage medium, a communication device, and a communication system. The method comprises: receiving first information sent by a network access device, wherein the first information is related to a configuration condition for small data transmission of a terminal device; or sending second information to the network access device, wherein the second information is related to incoming communication of a mobile station based on a core network. According to the present disclosure, when core network equipment processes downlink information of the terminal device, the configuration condition for small data transmission of the terminal device can be considered, and the network access device can acquire the condition related to the incoming communication of the mobile station based on the core network.

## Description

### TECHNICAL FIELD

The present disclosure relates to the field of communication technologies, and in particular, to a data transmission method and apparatus, a storage medium, a communication device, and a communication system.

### BACKGROUND

In current wireless communication systems, based on wireless mobile communication technology, various standards and protocols may be used for data transmission between a base station and a wireless mobile device. When the wireless mobile device transmits data to the network, no matter how much data is transmitted, the wireless mobile device may be required to establish a connection with the network.

### SUMMARY

The present disclosure provides a data transmission method and apparatus, a storage medium, a communication device, and a communication system.

A first aspect of embodiments of the present disclosure provides a data transmission method, which is performed by a core network device and includes:
receiving first information sent by an access network device, where the first information is related to configuration status of small data transmission of a terminal device; or
sending second information to the access network device, where the second information is related to core network based mobile terminated communication.

With reference to some embodiments of the first aspect, in some embodiments, the method further includes:
determining, based on the first information, whether to transmit buffered downlink information, where the downlink information includes signaling and/or data buffered for performing the core network based mobile terminated communication.

With reference to some embodiments of the first aspect, in some embodiments, the first information includes at least one of following:
first indication information indicating whether the terminal device is configured with small data transmission;
a first information type corresponding to small data transmission configured for the terminal device;
an extended discontinuous reception cycle parameter configured for the terminal device;
threshold information corresponding to small data transmission configured for the terminal device;
a first protocol data unit session identifier corresponding to small data transmission configured for the terminal device;
a first quality of service flow identifier corresponding to small data transmission configured for the terminal device.

With reference to some embodiments of the first aspect, in some embodiments, determining, based on the first information, whether to transmit the buffered downlink information includes:
determining, based on the first indication information, that the terminal device is configured with the small data transmission, and transmitting the downlink information corresponding to the small data transmission.

With reference to some embodiments of the first aspect, in some embodiments, determining, based on the first information, whether to transmit the buffered downlink information includes:
information in the downlink information belongs to the first information type, transmitting the downlink information corresponding to the small data transmission.

With reference to some embodiments of the first aspect, in some embodiments, determining, based on the first information, whether to transmit the buffered downlink information includes:
an extended discontinuous reception cycle represented by the extended discontinuous reception cycle parameter is greater than or equal to a preset cycle, transmitting the downlink information corresponding to the small data transmission.

With reference to some embodiments of the first aspect, in some embodiments, determining, based on the first information, whether to transmit the buffered downlink information includes:
a data size of information of the first information type in the downlink information is less than or equal to a data threshold represented by the threshold information, transmitting the downlink information corresponding to the small data transmission.

With reference to some embodiments of the first aspect, in some embodiments, determining, based on the first information, whether to transmit the buffered downlink information includes:
a second protocol data unit session identifier corresponding to information of the first information type in the downlink information is consistent with the first protocol data unit session identifier, and/or a second quality of service flow identifier corresponding to the information of the first information type in the downlink information is consistent with the first quality of service flow identifier, transmitting the downlink information corresponding to the small data transmission.

With reference to some embodiments of the first aspect, in some embodiments, receiving the first information sent by the access network device includes:
receiving a first message sent by the access network device, where the first message carries the first information.

With reference to some embodiments of the first aspect, in some embodiments, receiving the first message sent by the access network device includes:
receiving a control plane message sent by the access network device.

With reference to some embodiments of the first aspect, in some embodiments, receiving the first message sent by the access network device includes:
receiving a user plane message sent by the access network device.

With reference to some embodiments of the first aspect, in some embodiments, receiving the first message sent by the access network device includes:
receiving an inactive state transition report message of the terminal device sent by the access network device.

With reference to some embodiments of the first aspect, in some embodiments, the inactive state transition report message is sent after the access network device switches the terminal device to an inactive state.

With reference to some embodiments of the first aspect, in some embodiments, the method further includes:
determining to transmit the buffered downlink information, and transmitting, to the access network device based on the first information, the downlink information corresponding to the small data transmission.

With reference to some embodiments of the first aspect, in some embodiments, the second information includes at least one of following:
second indication information indicating a buffer start;
a second information type corresponding to the buffered downlink information;
time information corresponding to the buffered downlink information;
a data size corresponding to the buffered downlink information;
a third protocol data unit session identifier corresponding to the buffered downlink information;
a third quality of service flow identifier corresponding to the buffered downlink information.

With reference to some embodiments of the first aspect, in some embodiments, sending the second information to the access network device includes:
sending a second message to the access network device, where the second message carries the second information.

With reference to some embodiments of the first aspect, in some embodiments, sending the second message to the access network device includes:
sending a control plane message to the access network device.

With reference to some embodiments of the first aspect, in some embodiments, sending the second message to the access network device includes:
sending a user plane message to the access network device.

With reference to some embodiments of the first aspect, in some embodiments, the method further includes:
receiving third information sent by the access network device; and
determining, based on the third information, whether to transmit the downlink information corresponding to the small data transmission.

With reference to some embodiments of the first aspect, in some embodiments, the third information includes at least one of following:
third indication information for notifying the core network device that the terminal device is capable of receiving the downlink information;
a third information type corresponding to the downlink information that the terminal device is capable of receiving;
a fourth protocol data unit session identifier corresponding to the downlink information that the terminal device is capable of receiving; and
a fourth quality of service flow identifier corresponding to the downlink information that the terminal device is capable of receiving.

With reference to some embodiments of the first aspect, in some embodiments, the method further includes:
determining to transmit the downlink information corresponding to the small data transmission, and transmitting, based on the third information, the downlink information corresponding to the small data transmission to the access network device.

A second aspect of embodiments of the present disclosure provides a data transmission method, which is performed by an access network device a includes:
sending first information to a core network device, where the first information is related to configuration status of small data transmission of a terminal device; or
receiving second information sent by the core network device, where the second information is related to core network based mobile terminated communication.

With reference to some embodiments of the second aspect, in some embodiments, the first information includes at least one of following:
first indication information indicating whether the terminal device is configured with small data transmission;
a first information type corresponding to small data transmission configured for the terminal device;
an extended discontinuous reception cycle parameter configured for the terminal device;
threshold information corresponding to small data transmission configured for the terminal device;
a first protocol data unit session identifier corresponding to small data transmission configured for the terminal device;
a first quality of service flow identifier corresponding to small data transmission configured for the terminal device.

With reference to some embodiments of the second aspect, in some embodiments, sending the first information to the core network device includes:
sending a first message to the core network device, where the first message carries the first information.

With reference to some embodiments of the second aspect, in some embodiments, sending the first message to the core network device includes:
sending a control plane message to the core network device.

With reference to some embodiments of the second aspect, in some embodiments, sending the first message to the core network device includes:
sending a user plane message to the core network device.

With reference to some embodiments of the second aspect, in some embodiments, sending the first message to the core network device includes:
sending an inactive state transition report message of the terminal device to the core network device.

With reference to some embodiments of the second aspect, in some embodiments, sending the inactive state transition report message of the terminal device to the core network device includes:
switching the terminal device to an inactive state, and sending the inactive state transition report message to the core network device.

With reference to some embodiments of the second aspect, in some embodiments, the method further includes:
receiving the downlink information corresponding to the small data transmission and transmitted by the core network device based on the first information.

With reference to some embodiments of the second aspect, in some embodiments, the method further includes:
sending the downlink information transmitted by the core network device to the terminal device through small data transmission.

With reference to some embodiments of the second aspect, in some embodiments, the method further includes:
determining, based on the second information, whether to send third information to the core network device, where the third information is used for notifying the core network device that the terminal device is capable of receiving downlink information, and the downlink information includes signaling and/or data buffered by the core network device for performing the core network based mobile terminated communication.

With reference to some embodiments of the second aspect, in some embodiments, the second information includes at least one of following:
second indication information indicating a buffer start;
a second information type corresponding to the buffered downlink information;
time information corresponding to the buffered downlink information;
a data size corresponding to the buffered downlink information;
a third protocol data unit session identifier corresponding to the buffered downlink information;
a third quality of service flow identifier corresponding to the buffered downlink information.

With reference to some embodiments of the second aspect, in some embodiments, receiving the second information sent by the core network device includes:
receiving a second message sent by the core network device, where the second message carries the second information.

With reference to some embodiments of the second aspect, in some embodiments, receiving the second message sent by the core network device includes:
receiving a control plane message sent by the core network device.

With reference to some embodiments of the second aspect, in some embodiments, receiving the second message sent by the core network device includes:
receiving a user plane message sent by the core network device.

With reference to some embodiments of the second aspect, in some embodiments, the method further includes:
determining to send the third information to the core network device, and generating the third information based on the second information; and
sending the third information to the core network device.

With reference to some embodiments of the second aspect, in some embodiments, the third information includes at least one of following:
third indication information for notifying the core network device that the terminal device is capable of receiving the downlink information;
a third information type corresponding to the downlink information that the terminal device is capable of receiving;
a fourth protocol data unit session identifier corresponding to the downlink information that the terminal device is capable of receiving; and
a fourth quality of service flow identifier corresponding to the downlink information that the terminal device is capable of receiving.

With reference to some embodiments of the second aspect, in some embodiments, the method further includes:
receiving the downlink information corresponding to the small data transmission and transmitted by the core network device based on the third information.

With reference to some embodiments of the second aspect, in some embodiments, the method further includes:
sending the downlink information transmitted by the core network device to the terminal device through small data transmission.

A third aspect of embodiments of the present disclosure provides a data transmission method, which is performed by a communications system including an access network device, a core network device, and a terminal device, and includes:
sending, by the access network device, a first message to the core network device, and receiving, by the core network device, the first information, where the first information is related to configuration status of small data transmission of the terminal device; or
sending, by the core network device second information to the access network device, and receiving the second information by the access network device, where the second information is related to core network based mobile terminated communication.

A fourth aspect of embodiments of the present disclosure provides a data transmission apparatus, including:
a first receiving module, configured to receive first information sent by an access network device, where the first information is related to configuration status of small data transmission of a terminal device; or
the apparatus includes:
   a first sending module, configured to send second information to the access network device, where the second information is related to core network based mobile terminated communication.

A fifth aspect of embodiments of the present disclosure provides a data transmission apparatus, including:
a second sending module, configured to send first information to a core network device, where the first information is related to configuration status of small data transmission of a terminal device; or
the apparatus includes:
   a second receiving module, configured to receive second information sent by the core network device, where the second information is related to core network based mobile terminated communication.

A sixth aspect of embodiments of the present disclosure provides a communication device, including:
one or more processors;
where the processor is configured to invoke computer instructions, thereby causing the communication device to implement the data transmission method according to optional implementations of the first aspect and the second aspect.

A seventh aspect of embodiments of the present disclosure provides a communication system, including a core network device and an access network device, where the core network device is configured to implement the data transmission method according to optional implementations of the first aspect, and the access network device is configured to implement the data transmission method according to optional implementation of the second aspect.

An eighth aspect of embodiments of the present disclosure provides a computer-readable storage medium, where the computer-readable storage medium stores computer instructions, and when the computer instructions are executed on a communication device, the communication device is caused to implement the data transmission method according to optional implementations of the first aspect and the second aspect.

The technical solutions provided in the embodiments of the present disclosure may include the following beneficial effects. First information sent by an access network device is received, where the first information is related to configuration status of small data transmission of a terminal device; or second information is sent to the access network device, where the second information is related to core network based mobile terminated communication, so that the core network device can consider the configuration status of small data transmission of the terminal device when processing downlink information of the terminal device, and the access network device can acknowledge situation related to core network based mobile terminated communication.

It is to be understood that both the foregoing general description and the following detailed description are exemplary and explanatory only and are not restrictive of the disclosure.

### BRIEF DESCRIPTION OF THE DRAWINGS

In order to more clearly illustrate the technical solutions in the embodiments of the present disclosure, the drawings required for describing the embodiments are introduced below. The following drawings are only some embodiments of the present disclosure and do not specifically limit the protection scope of the present disclosure.
FIG. 1a is a schematic structural diagram illustrating a communication system according to an embodiment of the present disclosure.
FIG. 1b is a schematic diagram illustrating another communication system according to an embodiment of the present disclosure.
FIG. 2a is a flowchart illustrating a data transmission method according to an embodiment of the present disclosure.
FIG. 2b is a flowchart illustrating another data transmission method according to an embodiment of the present disclosure.
FIG. 2c is a flowchart illustrating another data transmission method according to an embodiment of the present disclosure.
FIG. 2d is a flowchart illustrating yet another data transmission method according to an embodiment of the present disclosure.
FIG. 2e is a flowchart illustrating yet another data transmission method according to an embodiment of the present disclosure.
FIG. 2f is a flowchart illustrating yet another data transmission method according to an embodiment of the present disclosure.
FIG. 2g is a flowchart illustrating yet another data transmission method according to an embodiment of the present disclosure.
FIG. 3a is a flowchart illustrating yet another data transmission method according to an embodiment of the present disclosure.
FIG. 3b is a flowchart illustrating yet another data transmission method according to an embodiment of the present disclosure.
FIG. 3c is a flowchart illustrating yet another data transmission method according to an embodiment of the present disclosure.
FIG. 3d is a flowchart illustrating yet another data transmission method according to an embodiment of the present disclosure.
FIG. 3e is a flowchart illustrating yet another data transmission method according to an embodiment of the present disclosure.
FIG. 3f is a flowchart illustrating yet another data transmission method according to an embodiment of the present disclosure.
FIG. 4a is a flowchart illustrating yet another data transmission method according to an embodiment of the present disclosure.
FIG. 4b is a flowchart illustrating yet another data transmission method according to an embodiment of the present disclosure.
FIG. 4c is a flowchart illustrating yet another data transmission method according to an embodiment of the present disclosure.
FIG. 4d is a flowchart illustrating yet another data transmission method according to an embodiment of the present disclosure.
FIG. 4e is a flowchart illustrating yet another data transmission method according to an embodiment of the present disclosure.
FIG. 4f is a flowchart illustrating yet another data transmission method according to an embodiment of the present disclosure.
FIG. 4g is a flowchart illustrating yet another data transmission method according to an embodiment of the present disclosure.
FIG. 5a is a flowchart illustrating yet another data transmission method according to an embodiment of the present disclosure.
FIG. 5b is a flowchart illustrating yet another data transmission method according to an embodiment of the present disclosure.
FIG. 5c is a flowchart illustrating yet another data transmission method according to an embodiment of the present disclosure.
FIG. 5d is a flowchart illustrating yet another data transmission method according to an embodiment of the present disclosure.
FIG. 5e is a flowchart illustrating yet another data transmission method according to an embodiment of the present disclosure.
FIG. 5f is a flowchart illustrating yet another data transmission method according to an embodiment of the present disclosure.
FIG. 5g is a flowchart illustrating yet another data transmission method according to an embodiment of the present disclosure.
FIG. 5h is a flowchart illustrating yet another data transmission method according to an embodiment of the present disclosure.
FIG. 6a is a flowchart illustrating yet another data transmission method according to an embodiment of the present disclosure.
FIG. 6b is a flowchart illustrating yet another data transmission method according to an embodiment of the present disclosure.
FIG. 7a is a block diagram of a data transmission apparatus 1000 according to an embodiment of the present disclosure.
FIG. 7b is a block diagram of another data transmission apparatus 1100 according to an embodiment of the present disclosure.
FIG. 8a is a block diagram of another data transmission apparatus 2000 according to an embodiment of the present disclosure.
FIG. 8b is a block diagram of still another data transmission apparatus 2100 according to an embodiment of the present disclosure.
FIG. 9 is a block diagram illustrating a communication device according to an embodiment of the present disclosure.

### DETAILED DESCRIPTION

Embodiments of the present disclosure provide a data transmission method and apparatus, a storage medium, a communication device, and a communication system. In some embodiments, terms such as data transmission method, information processing method, and communication method may be replaced with each other, terms such as data transmission apparatus, information processing apparatus, and communication device may be replaced with each other, and terms such as communication system, information processing system, and communication system may be replaced with each other.

The embodiments of the present disclosure are not exhaustive, but are merely illustrative of some embodiments without being intended to specifically limit the protection scope of the present disclosure. In the case of no contradiction, each step in a certain embodiment can be implemented as an independent embodiment, and the steps can be arbitrarily combined. For example, the solution after removing part of the steps in a certain embodiment can also be implemented as an independent embodiment, and the order of the steps in a certain embodiment can be arbitrarily exchanged. In addition, the optional implementations in a certain embodiment can be arbitrarily combined. Moreover, the embodiments can be arbitrarily combined. For example, part or all of the steps in different embodiments can be arbitrarily combined, and a certain embodiment can be arbitrarily combined with the optional implementations of other embodiments.

The terms used in the embodiments of the present disclosure are only for the purpose of describing specific embodiments, and are not intended to limit the present disclosure. The singular expressions "a", "an", "the", "the above", "said", "the foregoing", "this" and the like in the embodiments of the present disclosure also include plural expressions, unless clearly indicated to the contrary in the context. In the embodiments of the present disclosure, "a plurality of" means two or more.

Prefix words such as "first" and "second" in the embodiments of the present disclosure are only used to distinguish different described objects, and do not constitute a limitation on the position, order, priority, quantity, or content of the described objects. For the description of the described objects, reference may be made to the description of the context in the claims or the embodiments, and no redundant limitation should be made due to the use of prefix words. For example, if the described object is a "field", ordinal numbers before the "field" in the "first field" and the "second field" do not limit a location or a sequence of the "field", and the "first" and the "second" do not limit whether the "field" modified by the "first" and the "second" are in a same message, and do not limit a sequence of the "first field" and the "second field". For another example, if the described object is "level", ordinal numbers before "level" in "first level" and "second level" do not limit a priority between "levels". For another example, the number of described objects is not limited by the ordinal number, and may be one or more. Taking "first apparatus" as an example, the number of "apparatus" may be one or more. In addition, objects modified by different prefix words may be the same or different, for example, if a described object is "apparatus", "first apparatus" and "second apparatus" may be the same apparatus or different apparatuses, and types thereof may be the same or different; and for another example, if a described object is "information", "first information" and "second information" may be the same information or different information, and content thereof may be the same or different.

Description manners such as "at least one (at least one item, at least one piece) of A, B, C...", "A and/or B and/or C..." in the embodiments of the present disclosure include a case where any one of A, B, C... exists alone, and also include any combination of any multiple of A, B, C..., and each case may exist alone. For example, "at least one of A, B, C" includes cases where A, B, C exists alone, A and B combination exists, A and C combination exists, B and C combination exists, and A and B and C combination exists. For example, A and/or B includes cases where A exists alone, B exists alone, A and B combination exists.

In some embodiments, "in one case, A; in another case B", "in response to a case, A; in response to another case, B" and the like may include the following technical solutions according to cases. A is performed independently of B, that is, in some embodiments, A. B is performed independently of A, that is, in some embodiments, B. A and B are selectively performed, that is, A or B is selected for being performed in some embodiments. A and B are both performed, that is, A and B in some embodiments. Situation is also similar when there are more branches such as A, B, and C.

In some embodiments, "comprising A", "including A", "indicating A", and "carrying A" may be interpreted as directly carrying A, or may be interpreted as indirectly indicating A.

In some embodiments, the terms "in response to," "in response to determining that," "in the case of," "while," "when," "in case," "if," and the like may be interchanged.

In some embodiments, terms such as "greater than", "greater than or equal to", "not less than", "more than", "more than or equal to", "not fewer than", "higher than", "higher than or equal to", "not lower than", and "above" may be replaced with each other, and terms such as "less than", "less than or equal to", "not greater than", "fewer than", "fewer than or equal to", "not more than", "lower than", "lower than or equal to", "not higher than", and "below" may be replaced with each other.

In some embodiments, terms such as "radio", "wireless", "radio access network (RAN)", "access network (AN)", and "RAN-based" may be replaced with each other.

In some embodiments, "predetermined" and "preset" may be interpreted as being pre-specified in a protocol, or may be interpreted as performing a preset action by a device or the like.

In some embodiments, the apparatus and the like may be interpreted as physical or virtual, and names thereof are not limited to names described in the embodiments, and terms such as "apparatus", "equipment", "device", "network element", "node", "function", "unit", "entity", "system", "chip", "chip system", and "body" may be replaced with each other.

In some embodiments, names of information and the like are not limited to names described in the embodiments, and terms such as "information", "message", "signaling", "report", "configuration", "indication", "parameter", and "data" may be replaced with each other.

In some embodiments, terms such as "instruction" and "program" may be replaced with each other.

In some embodiments, "obtaining", "acquiring", "deriving", "receiving", and "transmitting (sending and/or receiving)" may be replaced with each other, and may be interpreted as a plurality of meanings such as receiving from another subject, obtaining from a protocol, processing by itself, and autonomous implementation.

In some embodiments, "sending", "reporting", "delivering", and "transmitting (sending and/or receiving)" may be replaced with each other.

In some embodiments, the acquired data, information, and the like comply with laws and regulations of the country where the data is located.

In some embodiments, data, information, and the like may be obtained after user consent is obtained.

In addition, each element, each row, or each column in the table of the embodiments of the present disclosure may be implemented as an independent embodiment, and any combination of any element, any row, or any column may also be implemented as an independent embodiment.

It should be noted that all the actions of acquiring signals, information or data in the present disclosure are performed under the premise of complying with the corresponding data protection regulation policies of the local country and obtaining authorization given by the corresponding device owner.

In the embodiments of the present disclosure, although the operations are described in a specific order in the drawings, it should not be understood as requiring these operations to be performed in the specific order shown or in a serial order, or requiring all the operations shown to be performed to obtain the desired results. In certain circumstances, multitasking and parallel processing may be advantageous. In addition, it is also advantageous to send multiple pieces of information through the same message.

The following describes an application environment of a data transmission method according to some embodiments.

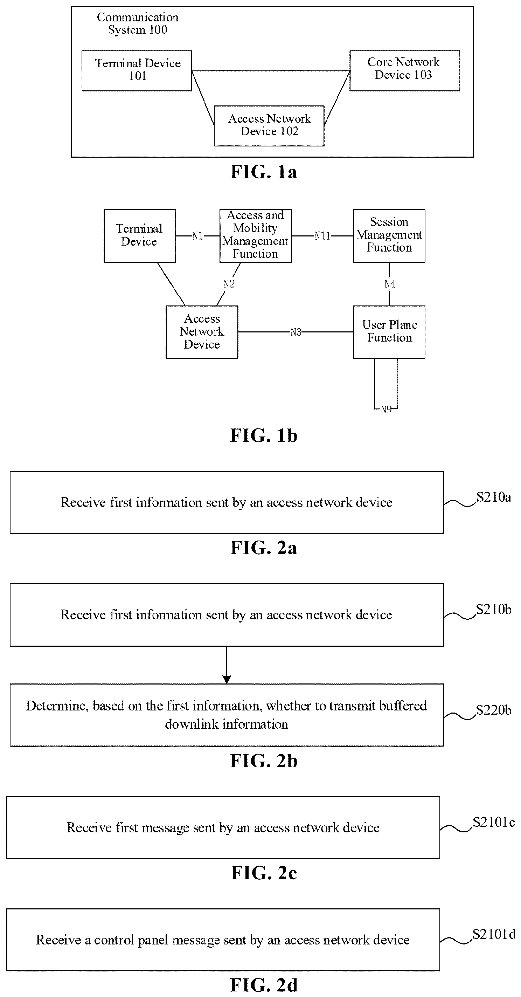

FIG. 1a is a schematic structural diagram illustrating a communication system according to an embodiment of the present disclosure. As shown in FIG. 1a, a communication system 100 includes a terminal device 101, an access network (RAN) device 102, and a core network device 103.

In some embodiments, the communications system 100 is, for example, a long term evolution (LTE)) system, a 5th generation (5G) mobile communications system, a 5G new radio (NR) system, or another future communications system, but is not limited thereto.

In some embodiments, the terminal device 101 is, for example, user equipment (UE), a mobile station (MS), a mobile terminal (MT), a mobile phone, a wearable device, an Internet of Things device, an automobile with a communication function, a smart car, a tablet computer (Pad), a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, or a wireless terminal device in a smart home.

In some embodiments, the access network device 102 is, for example, a transmission reception point (TRP), an evolved NodeB (eNB), a next generation NodeB (gNB) in an NR system, a base station in another future communication system, or an access node in a wireless fidelity (WiFi) system, but is not limited thereto. In some embodiments, the access network device may include a central unit (CU) and a distributed unit (DU), where the CU may also be referred to as a control unit. Protocol layers of the access network device may be split by using a CU-DU structure, functions of some protocol layers are centrally controlled by the CU, functions of some or all remaining protocol layers are distributed in the DU, and the CU centrally controls the DU, but itis not limited thereto.

In some embodiments, the core network device 103 may be one device, including one or more network elements, or may be a plurality of devices or device groups, each including all or some functions of the one or more network elements. The network element may be virtual or physical.

It can be understood that the communication system described in the embodiments of the present disclosure is intended to more clearly illustrate the technical solutions of the embodiments of the present disclosure, and does not constitute a limitation on the technical solutions provided in the embodiments of the present disclosure. Those of ordinary skill in the art can know that with the evolution of system architectures and the emergence of new service scenarios, the technical solutions provided in the embodiments of the present disclosure are also applicable to similar technical problems.

The following embodiments of the present disclosure may be applied to the communication system 100 or some main bodies shown in FIG. 1, but are not limited thereto. The main bodies shown in FIG. 1 are examples, the communication system may include all or part of the main bodies in FIG. 1, or may include other main bodies other than FIG. 1. The number of the main bodies is arbitrary, and the connection relationship between the main bodies is exemplary. The main bodies may not be connected or may be connected, and the connection may be arbitrary, which may be direct connection or indirect connection, and may be wired connection or wireless connection. In addition, names of the communication system and the entities are not limited.

FIG. 1b is a schematic diagram illustrating another communication system according to an embodiment of the present disclosure. As shown in FIG. 1b, the communication system includes a terminal device, an access network device, an access and mobility management function (AMF) network element, a session management function (SMF) network element, and a user plane function (UPF) network element.

In some embodiments, the access and mobility management function network element is used for access and mobility management of the terminal device in the mobile network, including providing a session management message transmission channel for the terminal device and the session management function, providing authentication and authentication functions for access of the terminal device, maintaining core network control plane access points of the terminal device and the access network device, and the like, and the name of the access and mobility management function network element is not limited thereto.

In some embodiments, the session management function network element is used for session management of the terminal devices in the mobile network, including tunnel maintenance, address allocation and management of the terminal device, user plane function network element selection and control, policy enforcement, quality of service (Qos) control, and the like, and the name of the session management function network element is not limited thereto.

In some embodiments, the user plane function network element is configured to route and forward a user plane data packet, including packet routing and forwarding, policy implementation, traffic reporting, quality of service processing, and the like.

In some implementations, the access network device provides, to the core network device, an extended discontinuous reception (eDRX) cycle parameter configured for the terminal device. When downlink information arrives, a network element in the core network device, for example, the access and mobility management function network element, evaluates reachability of the terminal device based on the extended discontinuous reception cycle parameter. If the evaluation result is negative, the access and mobility management function network element estimates waiting duration, buffers the downlink information, and notifies another network element. For example, the session management function network element and the user plane function network element buffer the downlink information. When the evaluation result is positive, the access network device is notified to switch the terminal device to a connected state (CONNECTED), and the access network device pages the terminal device to complete downlink information transmission, thereby implementing core network based mobile terminated communication (CN based MT communication), where the name thereof is not limited thereto. For example, the core network based mobile terminated communication may also be referred to as high latency communication functions.

In some implementations, when the terminal device is in the inactive state (INACTIVE), the access network device requests and receives, based on small data transmission (SDT) configured for the terminal device, downlink small data targeted for the terminal device from a network element of the core network device, for example, a user plane function network element, and triggers small data transmission paging. The terminal device sends a request to the access network device based on the paging, receives the small data delivered by the access network device, and sends uplink small data to the user plane function network element through the access network device, thereby implementing small data transmission, where the name thereof is not limited thereto. For example, the small data transmission may also be referred to as mobile terminated small data transmission (MT-SDT).

Based on the foregoing implementation, upon evaluating reachability of the terminal device, as the network element in the core network device, for example, the access and mobility management function network element, evaluates the reachability of the terminal device as being unreachable, it selects to buffer the downlink information. Accordingly, if the terminal device is provided with small data transmission at this time, the small data serving as downlink information is to be buffered at the core network side, rather than being transmitted to the terminal device based on small data transmission.

FIG. 2a is a flowchart illustrating a data transmission method according to an embodiment of the present disclosure. As shown in FIG. 2a, the data transmission method may be applied to a core network device, and includes the following step(s).

In step S210a, first information sent by an access network device is received.

The first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit (PDU) session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device.

In some embodiments, the first information type corresponding to the small data transmission configured for the terminal device includes but is not limited to uplink, downlink, or uplink and downlink.

In some embodiments, the threshold information indicates a data size (datasize), configured for the terminal device, of information that can be transmitted through small data transmission.

In some embodiments, the threshold information indicates a data volume (datavolume), configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT (Mobile Originated-SDT) configuration information of the terminal device.

In some embodiments, the core network device includes an access and mobility management function network element, a session management function network element, a user plane function network element, and the like.

In some embodiments, the access and mobility management function network element receives the first information sent by the access network device.

In some embodiments, the session management function network element receives the first information sent by the access network device.

In some embodiments, the user plane function network element receives the first information sent by the access network device.

In some embodiments, a first message sent by an access network device is received, where the first message carries the first information, and the first information is related to configuration status of small data transmission of a terminal device.

In some embodiments, the first message is a control plane (CP) message; and the core network device receives the control plane message sent by the access network device.

In some embodiments, the first message is a user plane (UP) message; and the core network device receives the user plane message sent by the access network device.

In some embodiments, the first message is an inactive state transition report message; and the core network device receives the inactive state transition report message of the terminal device sent by the access network device. In some embodiments, the inactive state transition report message is sent after the access network device switches the terminal device to the inactive state.

It is specified in some embodiments of this disclosure that the core network device receives the first information sent by the access network device, where the first information is related to configuration status of small data transmission of the terminal device. Based on the first information, the core network device can learn of configuration status of small data transmission of the terminal device.

FIG. 2b is a flowchart illustrating another data transmission method according to an embodiment of the present disclosure. As shown in FIG. 2b, the data transmission method may be applied to a core network device, and includes the following step(s).

In step S210b, first information sent by an access network device is received.

The first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit (PDU) session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device. In some embodiments, the first information type corresponding to the small data transmission configured for the terminal device includes but is not limited to uplink, downlink, or uplink and downlink.

In some embodiments, the threshold information indicates a data size, configured for the terminal device, of information that can be transmitted through small data transmission.

In some embodiments, the threshold information indicates a data volume, configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT configuration information of the terminal device.

In some embodiments, the core network device includes an access and mobility management function network element, a session management function network element, a user plane function network element, and the like.

In some embodiments, the access and mobility management function network element receives the first information sent by the access network device.

In some embodiments, the session management function network element receives the first information sent by the access network device.

In some embodiments, the user plane function network element receives the first information sent by the access network device.

In some embodiments, a first message sent by an access network device is received, where the first message carries the first information, and the first information is related to configuration status of small data transmission of a terminal device.

In some embodiments, the first message is a control plane message; and the core network device receives the control plane message sent by the access network device.

In some embodiments, the first message is a user plane message; and the core network device receives the user plane message sent by the access network device.

In some embodiments, the first message is an inactive state transition report message; and the core network device receives the inactive state transition report message of the terminal device sent by the access network device. In some embodiments, the inactive state transition report message is sent after the access network device switches the terminal device to the inactive state.

In step S220b, it is determined, based on the first information, whether to transmit buffered downlink information.

In some embodiments, the downlink information includes signaling and/or data buffered for performing the core network based mobile terminated communication.

In some implementations, determining, based on the first information, whether to transmit the buffered downlink information includes:
determining, based on the first indication information, that the terminal device is configured with small data transmission, and transmitting downlink information corresponding to the small data transmission.

The first information includes at least first indication information indicating whether the terminal device is configured with small data transmission. Optionally, the first information may further include at least one of the following: a first information type corresponding to small data transmission configured for the terminal device; an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device.

Optionally, in a case of determining, based on the first indication information, that the terminal device is configured with small data transmission, downlink information corresponding to the small data transmission is transmitted. Optionally, in response to determining, based on the first indication information, that the terminal device is configured with small data transmission, downlink information corresponding to the small data transmission is transmitted. Optionally, when determining, based on the first indication information, that the terminal device is configured with small data transmission, downlink information corresponding to the small data transmission is transmitted.

In some implementations, determining, based on the first information, whether to transmit the buffered downlink information includes:
determining, based on the first indication information, that the terminal device is configured with small data transmission, and information in the downlink information belongs to a first information type, transmitting the downlink information corresponding to the small data transmission.

The first information includes at least first indication information indicating whether the terminal device is configured with small data transmission, and a first information type corresponding to the small data transmission configured for the terminal device. Optionally, the first information may further include at least one of the following: an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device.

Optionally, in a case of determining, based on the first indication information, that the terminal device is configured with small data transmission and information in the downlink information belongs to the first information type, the downlink information corresponding to the small data transmission is transmitted. Optionally, in response to determining, based on the first indication information, that the terminal device is configured with small data transmission and information in the downlink information belongs to the first information type, the downlink information corresponding to the small data transmission is transmitted. Optionally, when it is determined, based on the first indication information, that the terminal device is configured with small data transmission and information in the downlink information belongs to the first information type, the downlink information corresponding to the small data transmission is transmitted.

In some embodiments, that the information in the downlink information belongs to the first information type includes the following cases: the information in the downlink information belongs to signaling corresponding to small data transmission configured for the terminal device; and the information in the downlink information belongs to data corresponding to small data transmission configured for the terminal device.

In some embodiments, when at least some information in the downlink information belongs to the first information type and another condition in the foregoing implementation is met, the downlink information corresponding to the small data transmission is transmitted.

In some implementations, determining, based on the first information, whether to transmit the buffered downlink information includes:
determining, based on the first indication information, that the terminal device is configured with small data transmission, information in the downlink information belongs to the first information type, and an extended discontinuous reception cycle represented by the extended discontinuous reception cycle parameter is greater than or equal to a preset cycle, transmitting downlink information corresponding to the small data transmission.

The first information includes at least: the first indication information indicating whether the terminal device is configured with small data transmission; the first information type corresponding to small data transmission configured for the terminal device; and the extended discontinuous reception cycle parameter configured for the terminal device. Optionally, the first information may further include at least one of the following: threshold information corresponding to small data transmission configured for the terminal device; a first protocol data unit session identifier corresponding to small data transmission configured for the terminal device; and a first quality of service flow identifier corresponding to small data transmission configured for the terminal device.

Optionally, in a case of determining, based on the first indication information, that the terminal device is configured with small data transmission, the information in the downlink information belongs to the first information type, and the extended discontinuous reception cycle represented by the extended discontinuous reception cycle parameter is greater than or equal to the preset cycle, the downlink information corresponding to the small data transmission is transmitted. Optionally, in response to determining, based on the first indication information, that the terminal device is configured with small data transmission, the information in the downlink information belongs to the first information type, and the extended discontinuous reception cycle represented by the extended discontinuous reception cycle parameter is greater than or equal to the preset cycle, the downlink information corresponding to the small data transmission is transmitted. Optionally, when it is determined, based on the first indication information, that the terminal device is configured with small data transmission, the information in the downlink information belongs to the first information type, and the extended discontinuous reception cycle represented by the extended discontinuous reception cycle parameter is greater than or equal to the preset cycle, the downlink information corresponding to the small data transmission is transmitted.

In some embodiments, that the information in the downlink information belongs to the first information type includes the following cases: the information in the downlink information belongs to signaling corresponding to small data transmission configured for the terminal device; and the information in the downlink information belongs to data corresponding to small data transmission configured for the terminal device.

In some embodiments, when at least some information in the downlink information belongs to the first information type and another condition in the foregoing implementation is met, the downlink information corresponding to the small data transmission is transmitted.

In some embodiments, the preset cycle is 10.24 seconds or greater than 10.24 seconds.

In some implementations, determining, based on the first information, whether to transmit the buffered downlink information includes:
determining, based on the first indication information, that the terminal device is configured with small data transmission, the information in the downlink information belongs to the first information type, the extended discontinuous reception cycle represented by the extended discontinuous reception cycle parameter is greater than or equal to the preset cycle, and a data size of information belonging to the first information type in the downlink information is less than or equal to a data threshold represented by threshold information, transmitting the downlink information corresponding to the small data transmission.

The first information includes at least: the first indication information indicating whether the terminal device is configured with small data transmission; the first information type corresponding to small data transmission configured for the terminal device; the extended discontinuous reception cycle parameter configured for the terminal device; and the threshold information corresponding to small data transmission configured for the terminal device. Optionally, the first information may further include at least one of the following: a first protocol data unit session identifier corresponding to small data transmission configured for the terminal device; and a first quality of service flow identifier corresponding to small data transmission configured for the terminal device.

Optionally, in a case of determining, based on the first indication information, that the terminal device is configured with small data transmission, the information in the downlink information belongs to the first information type, the extended discontinuous reception cycle represented by the extended discontinuous reception cycle parameter is greater than or equal to the preset cycle, and the data size of the information belonging to the first information type in the downlink information is less than or equal to the data threshold represented by the threshold information, the downlink information corresponding to the small data transmission is transmitted. Optionally, in response to determining, based on the first indication information, that the terminal device is configured with small data transmission, the information in the downlink information belongs to the first information type, the extended discontinuous reception cycle represented by the extended discontinuous reception cycle parameter is greater than or equal to the preset cycle, and the data size of the information belonging to the first information type in the downlink information is less than or equal to the data threshold represented by the threshold information, the downlink information corresponding to the small data transmission is transmitted. Optionally, when it is determined, based on the first indication information, that the terminal device is configured with small data transmission, the information in the downlink information belongs to the first information type, the extended discontinuous reception cycle represented by the extended discontinuous reception cycle parameter is greater than or equal to the preset cycle, and the data size of the information belonging to the first information type in the downlink information is less than or equal to the data threshold represented by the threshold information, the downlink information corresponding to the small data transmission is transmitted.

In some embodiments, that the information in the downlink information belongs to the first information type includes the following cases: the information in the downlink information belongs to signaling corresponding to small data transmission configured for the terminal device; and the information in the downlink information belongs to data corresponding to small data transmission configured for the terminal device.

In some embodiments, when at least some information in the downlink information belongs to the first information type and another condition in the foregoing implementation is met, the downlink information corresponding to the small data transmission is transmitted.

In some embodiments, the preset cycle is 10.24 seconds or greater than 10.24 seconds.

In some implementations, determining, based on the first information, whether to transmit the buffered downlink information includes:
determining, based on the first indication information, that the terminal device is configured with small data transmission, the information in downlink information belongs to the first information type, the extended discontinuous reception cycle represented by the extended discontinuous reception cycle parameter is greater than or equal to the preset cycle, the data size of information belonging to the first information type in the downlink information is less than or equal to the data threshold represented by threshold information, a second protocol data unit session identifier corresponding to the information belonging to the first information type in the downlink information is consistent with an first protocol data unit session identifier, and a second quality of service flow identifier corresponding to the information belonging to the first information type in the downlink information is consistent with a first quality of service flow identifier, transmitting the downlink information corresponding to the small data transmission.

The first information includes at least: the first indication information indicating whether the terminal device is configured with small data transmission; the first information type corresponding to the small data transmission configured for the terminal device; the extended discontinuous reception cycle parameter configured for the terminal device; the threshold information corresponding to the small data transmission configured for the terminal device; the first protocol data unit session identifier corresponding to the small data transmission configured for the terminal device; and the first quality of service flow identifier corresponding to the small data transmission configured for the terminal device.

Optionally, in case of determining, based on the first indication information, that the terminal device is configured with small data transmission, the information in the downlink information belongs to the first information type, the extended discontinuous reception cycle represented by the extended discontinuous reception cycle parameter is greater than or equal to the preset cycle, the data size of the information belonging to the first information type in the downlink information is less than or equal to the data threshold represented by the threshold information, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted. Optionally, in response to determining, based on the first indication information, that the terminal device is configured with small data transmission, the information in the downlink information belongs to the first information type, the extended discontinuous reception cycle represented by the extended discontinuous reception cycle parameter is greater than or equal to the preset cycle, the data size of the information belonging to the first information type in the downlink information is less than or equal to the data threshold represented by the threshold information, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted. Optionally, when it is determined, based on the first indication information, that the terminal device is configured with small data transmission, the information in the downlink information belongs to the first information type, the extended discontinuous reception cycle represented by the extended discontinuous reception cycle parameter is greater than or equal to the preset cycle, the data size of the information belonging to the first information type in the downlink information is less than or equal to the data threshold represented by the threshold information, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted.

In some embodiments, that the information in the downlink information belongs to the first information type includes the following cases: the information in the downlink information belongs to signaling corresponding to small data transmission configured for the terminal device; and the information in the downlink information belongs to data corresponding to small data transmission configured for the terminal device.

In some embodiments, when at least some information in the downlink information belongs to the first information type and another condition in the foregoing implementation is met, the downlink information corresponding to the small data transmission is transmitted.

In some embodiments, the preset cycle is 10.24 seconds or greater than 10.24 seconds.

In some embodiments, when any one of the second protocol data unit session identifier being consistent with the first protocol data unit session identifier and the second quality of service flow identifier being consistent with the first quality of service flow identifier, as well as another condition(s) in the foregoing implementation are met, the downlink information corresponding to small data transmission is transmitted.

In some implementations, determining, based on the first information, whether to transmit the buffered downlink information includes:
information in the downlink information belongs to the first information type, transmitting the downlink information corresponding to small data transmission.

The first information includes at least the first information type corresponding to small data transmission configured for the terminal device. Optionally, the first information may further include at least one of the following: a first information type corresponding to small data transmission configured for the terminal device; an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device.

Optionally, in a case that the information in the downlink information belongs to the first information type, the downlink information corresponding to the small data transmission is transmitted. Optionally, in response to the information in the downlink information belonging to the first information type, the downlink information corresponding to the small data transmission is transmitted. Optionally, when the information in the downlink information belongs to the first information type, the downlink information corresponding to the small data transmission is transmitted.

In some implementations, determining, based on the first information, whether to transmit the buffered downlink information includes:
the information in the downlink information belongs to the first information type, and the extended discontinuous reception cycle represented by the extended discontinuous reception cycle parameter is greater than or equal to the preset cycle, transmitting the downlink information corresponding to the small data transmission.

The first information includes at least the first information type corresponding to small data transmission configured for the terminal device and the extended discontinuous reception cycle parameter configured for the terminal device. Optionally, the first information may further include at least one of the following: first indication information indicating whether the terminal device is configured with small data transmission; threshold information corresponding to small data transmission configured for the terminal device; a first protocol data unit session identifier corresponding to small data transmission configured for the terminal device; and a first quality of service flow identifier corresponding to small data transmission configured for the terminal device.

Optionally, in a case that the information in the downlink information belongs to the first information type and the extended discontinuous reception cycle represented by the extended discontinuous reception cycle parameter is greater than or equal to the preset cycle, the downlink information corresponding to the small data transmission is transmitted. Optionally, in response to that the information in the downlink information belongs to the first information type and the extended discontinuous reception cycle represented by the extended discontinuous reception cycle parameter is greater than or equal to the preset cycle, the downlink information corresponding to the small data transmission is transmitted. Optionally, when the information in the downlink information belongs to the first information type and the extended discontinuous reception cycle represented by the extended discontinuous reception cycle parameter is greater than or equal to the preset cycle, the downlink information corresponding to the small data transmission is transmitted.

In some embodiments, that the information in the downlink information belongs to the first information type includes the following cases: the information in the downlink information belongs to signaling corresponding to small data transmission configured for the terminal device; and the information in the downlink information belongs to data corresponding to small data transmission configured for the terminal device.

In some embodiments, when at least some information in the downlink information belongs to the first information type and another condition in the foregoing implementation is met, the downlink information corresponding to the small data transmission is transmitted.

In some embodiments, the preset cycle is 10.24 seconds or greater than 10.24 seconds.

In some implementations, determining, based on the first information, whether to transmit the buffered downlink information includes:
information in the downlink information belongs to the first information type, a data size of the information belonging to the first information type in the downlink information is less than or equal to a data threshold represented by the threshold information, transmitting the downlink information corresponding to the small data transmission.

The first information includes at least the first information type corresponding to small data transmission configured for the terminal device and the threshold information corresponding to the small data transmission configured for the terminal device. Optionally, the first information may further include at least one of the following: first indication information indicating whether the terminal device is configured with small data transmission; an extended discontinuous reception cycle parameter configured for the terminal device; a first protocol data unit session identifier corresponding to small data transmission configured for the terminal device; and a first quality of service flow identifier corresponding to small data transmission configured for the terminal device.

Optionally, in a case that the information in the downlink information belongs to the first information type and the data size of the information belonging to the first information type in the downlink information is less than or equal to the data threshold represented by the threshold information, the downlink information corresponding to the small data transmission is transmitted. Optionally, in response to that the information in the downlink information belongs to the first information type and the data size of the information belonging to the first information type in the downlink information is less than or equal to the data threshold represented by the threshold information, the downlink information corresponding to the small data transmission is transmitted. Optionally, when the information in the downlink information belongs to the first information type and the data size of the information belonging to the first information type in the downlink information is less than or equal to the data threshold represented by the threshold information, the downlink information corresponding to the small data transmission is transmitted.

In some embodiments, that the information in the downlink information belongs to the first information type includes the following cases: the information in the downlink information belongs to signaling corresponding to small data transmission configured for the terminal device; and the information in the downlink information belongs to data corresponding to small data transmission configured for the terminal device.

In some embodiments, when at least some information in the downlink information belongs to the first information type and another condition in the foregoing implementation is met, the downlink information corresponding to the small data transmission is transmitted.

In some implementations, determining, based on the first information, whether to transmit buffered downlink information includes:
information in the downlink information belongs to the first information type, a second protocol data unit session identifier corresponding to the information belonging to the first information type in the downlink information is consistent with the first protocol data unit session identifier, and a second quality of service flow identifier corresponding to the information belonging to the first information type in the downlink information is consistent with the first quality of service flow identifier.

The first information includes at least the first information type corresponding to small data transmission configured for the terminal device, the first protocol data unit session identifier corresponding to the small data transmission configured for the terminal device, and the first quality of service flow identifier corresponding to the small data transmission configured for the terminal device. Optionally, the first information may further include at least one of the following: first indication information indicating whether the terminal device is configured with small data transmission; an extended discontinuous reception cycle parameter configured for the terminal device; and threshold information corresponding to small data transmission configured for the terminal device.

Optionally, in a case that the information in the downlink information belongs to the first information type, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted. Optionally, in response to that the information in the downlink information belongs to the first information type, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted. Optionally, when the information in the downlink information belongs to the first information type, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted.

In some embodiments, that the information in the downlink information belongs to the first information type includes the following cases: the information in the downlink information belongs to signaling corresponding to small data transmission configured for the terminal device; and the information in the downlink information belongs to data corresponding to small data transmission configured for the terminal device.

In some embodiments, when at least some information in the downlink information belongs to the first information type and another condition in the foregoing implementation is met, the downlink information corresponding to the small data transmission is transmitted.

In some embodiments, when any one of the second protocol data unit session identifier being consistent with the first protocol data unit session identifier and the second quality of service flow identifier being consistent with the first quality of service flow identifier, as well as another condition(s) in the foregoing implementation are met, downlink information corresponding to small data transmission is transmitted.

In some implementations, determining, based on the first information, whether to transmit the buffered downlink information includes:
the information in the downlink information belongs to the first information type, the extended discontinuous reception cycle represented by the extended discontinuous reception cycle parameter is greater than or equal to the preset cycle, the data size of the information belonging to the first information type in the downlink information is less than or equal to the data threshold represented by the threshold information, transmitting the downlink information corresponding to the small data transmission.

The first information includes at least: the first information type corresponding to small data transmission configured for the terminal device; the extended discontinuous reception cycle parameter configured for the terminal device; and the threshold information corresponding to small data transmission configured for the terminal device. Optionally, the first information may further include at least one of the following: first indication information indicating whether the terminal device is configured with small data transmission; a first protocol data unit session identifier corresponding to the small data transmission configured for the terminal device; and a first quality of service flow identifier corresponding to the small data transmission configured for the terminal device.

Optionally, in a case that the information in the downlink information belongs to the first information type, the extended discontinuous reception cycle represented by the extended discontinuous reception cycle parameter is greater than or equal to the preset cycle, and the data size of the information belonging to the first information type in the downlink information is less than or equal to the data threshold represented by the threshold information, the downlink information corresponding to the small data transmission is transmitted. Optionally, in response to that the information in the downlink information belongs to the first information type, the extended discontinuous reception cycle represented by the extended discontinuous reception cycle parameter is greater than or equal to the preset cycle, and the data size of the information belonging to the first information type in the downlink information is less than or equal to the data threshold represented by the threshold information, the downlink information corresponding to the small data transmission is transmitted. Optionally, when the information in the downlink information belongs to the first information type, the extended discontinuous reception cycle represented by the extended discontinuous reception cycle parameter is greater than or equal to the preset cycle, and the data size of the information belonging to the first information type in the downlink information is less than or equal to the data threshold represented by the threshold information, the downlink information corresponding to the small data transmission is transmitted.

In some embodiments, that the information in the downlink information belongs to the first information type includes the following cases: the information in the downlink information belongs to signaling corresponding to small data transmission configured for the terminal device; and the information in the downlink information belongs to data corresponding to small data transmission configured for the terminal device.

In some embodiments, when at least some information in the downlink information belongs to the first information type and another condition in the foregoing implementation is met, the downlink information corresponding to the small data transmission is transmitted.

In some embodiments, the preset cycle is 10.24 seconds or greater than 10.24 seconds.

In some implementations, determining, based on the first information, whether to transmit the buffered downlink information includes:
the information in the downlink information belongs to the first information type, the extended discontinuous reception cycle represented by the extended discontinuous reception cycle parameter is greater than or equal to the preset cycle, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, transmitting the downlink information corresponding to the small data transmission.

The first information includes at least: the first information type corresponding to small data transmission configured for the terminal device; the extended discontinuous reception cycle parameter configured for the terminal device; the first protocol data unit session identifier corresponding to the small data transmission configured for the terminal device; and the first quality of service flow identifier corresponding to the small data transmission configured for the terminal device. Optionally, the first information may further include at least one of the following: first indication information indicating whether the terminal device is configured with small data transmission; and threshold information corresponding to small data transmission configured for the terminal device.

Optionally, in a case of that the information in the downlink information belongs to the first information type, the extended discontinuous reception cycle represented by the extended discontinuous reception cycle parameter is greater than or equal to the preset cycle, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted. Optionally, in response to that the information in the downlink information belongs to the first information type, the extended discontinuous reception cycle represented by the extended discontinuous reception cycle parameter is greater than or equal to the preset cycle, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted. Optionally, when the information in the downlink information belongs to the first information type, the extended discontinuous reception cycle represented by the extended discontinuous reception cycle parameter is greater than or equal to the preset cycle, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted.

In some embodiments, that the information in the downlink information belongs to the first information type includes the following cases: the information in the downlink information belongs to signaling corresponding to small data transmission configured for the terminal device; and the information in the downlink information belongs to data corresponding to small data transmission configured for the terminal device.

In some embodiments, when at least some information in the downlink information belongs to the first information type and another condition in the foregoing implementation is met, the downlink information corresponding to the small data transmission is transmitted.

In some embodiments, the preset cycle is 10.24 seconds or greater than 10.24 seconds.

In some embodiments, when any one of the second protocol data unit session identifier being consistent with the first protocol data unit session identifier and the second quality of service flow identifier being consistent with the first quality of service flow identifier, as well as another condition(s) in the foregoing implementation are met, the downlink information corresponding to small data transmission is transmitted.

In some implementations, determining, based on the first information, whether to transmit the buffered downlink information includes:
information in the downlink information belongs to a first information type, a data size of the information belonging to the first information type in the downlink information is less than or equal to a data threshold represented by the threshold information, a second protocol data unit session identifier corresponding to the information belonging to the first information type in the downlink information is consistent with a first protocol data unit session identifier, and a second quality of service flow identifier corresponding to the information belonging to the first information type in the downlink information is consistent with a first quality of service flow identifier, transmitting the downlink information corresponding to small data transmission.

The first information includes at least: the first information type corresponding to small data transmission configured for the terminal device; the threshold information corresponding to small data transmission configured for the terminal device; the first protocol data unit session identifier corresponding to small data transmission configured for the terminal device; and the first quality of service flow identifier corresponding to small data transmission configured for the terminal device. Optionally, the first information may further include at least one of the following: first indication information indicating whether the terminal device is configured with small data transmission; and an extended discontinuous reception cycle parameter configured for the terminal device.

Optionally, in a case of that the information in the downlink information belongs to the first information type, the data size of the information belonging to the first information type in the downlink information is less than or equal to the data threshold represented by the threshold information, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted. Optionally, in response to that the information in the downlink information belongs to the first information type, the data size of the information belonging to the first information type in the downlink information is less than or equal to the data threshold represented by the threshold information, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted. Optionally, when the information in the downlink information belongs to the first information type, the data size of the information belonging to the first information type in the downlink information is less than or equal to the data threshold represented by the threshold information, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted.

In some embodiments, that the information in the downlink information belongs to the first information type includes the following cases: the information in the downlink information belongs to signaling corresponding to small data transmission configured for the terminal device; and the information in the downlink information belongs to data corresponding to small data transmission configured for the terminal device.

In some embodiments, when at least some information in the downlink information belongs to the first information type and another condition in the foregoing implementation is met, the downlink information corresponding to the small data transmission is transmitted.

In some embodiments, when any one of the second protocol data unit session identifier being consistent with the first protocol data unit session identifier and the second quality of service flow identifier being consistent with the first quality of service flow identifier, as well as another condition(s) in the foregoing implementation are met, downlink information corresponding to small data transmission is transmitted.

In some implementations, determining, based on the first information, whether to transmit the buffered downlink information includes:
the information in the downlink information belongs to the first information type, the extended discontinuous reception cycle represented by the extended discontinuous reception cycle parameter is greater than or equal to the preset cycle, the data size of the information belonging to the first information type in the downlink information is less than or equal to the data threshold represented by the threshold information, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, transmitting the downlink information corresponding to small data transmission.

The first information includes at least: the first information type corresponding to small data transmission configured for the terminal device; the extended discontinuous reception cycle parameter configured for the terminal device; the threshold information corresponding to small data transmission configured for the terminal device; the first protocol data unit session identifier corresponding to small data transmission configured for the terminal device; and the first quality of service flow identifier corresponding to small data transmission configured for the terminal device. Optionally, the first information may further include first indication information indicating whether the terminal device is configured with small data transmission.

Optionally, in a case of that the information in the downlink information belongs to the first information type, the extended discontinuous reception cycle represented by the extended discontinuous reception cycle parameter is greater than or equal to the preset cycle, the data size of the information belonging to the first information type in the downlink information is less than or equal to the data threshold represented by the threshold information, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted. Optionally, in response to that the information in the downlink information belongs to the first information type, the extended discontinuous reception cycle represented by the extended discontinuous reception cycle parameter is greater than or equal to the preset cycle, the data size of the information belonging to the first information type in the downlink information is less than or equal to the data threshold represented by the threshold information, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted. Optionally, when the information in the downlink information belongs to the first information type, the extended discontinuous reception cycle represented by the extended discontinuous reception cycle parameter is greater than or equal to the preset cycle, the data size of the information belonging to the first information type in the downlink information is less than or equal to the data threshold represented by the threshold information, the second protocol data unit session identifier corresponding to the information belonging to the first information type in the downlink information is consistent with the first protocol data unit session identifier, and the second quality of service flow identifier corresponding to the information belonging to the first information type in the downlink information is consistent with the first quality of service flow identifier, the downlink information corresponding to the small data transmission is transmitted..

In some embodiments, that the information in the downlink information belongs to the first information type includes the following cases: the information in the downlink information belongs to signaling corresponding to small data transmission configured for the terminal device; and the information in the downlink information belongs to data corresponding to small data transmission configured for the terminal device.

In some embodiments, when at least some information in the downlink information belongs to the first information type and another condition in the foregoing implementation is met, the downlink information corresponding to the small data transmission is transmitted.

In some embodiments, the preset cycle is 10.24 seconds or greater than 10.24 seconds.

In some embodiments, when any one of the second protocol data unit session identifier being consistent with the first protocol data unit session identifier and the second quality of service flow identifier being consistent with the first quality of service flow identifier, as well as another condition(s) in the foregoing implementation are met, downlink information corresponding to small data transmission is transmitted.

In some embodiments, the core network device does not transmit the buffered downlink information when at least one of the following is determined: the terminal device is not configured with small data transmission; the downlink information does not belong to the first information type; the extended discontinuous reception cycle represented by the extended discontinuous reception cycle parameter is less than the preset cycle; the data size of the information belonging to the first information type in the downlink information is greater than the data threshold represented by the threshold information; the second protocol data unit session identifier corresponding to the information belonging to the first information type in the downlink information is inconsistent with the first protocol data unit session identifier; and the second quality of service flow identifier corresponding to the information belonging to the first information type in the downlink information is inconsistent with the first quality of service flow identifier.

It is specified in some embodiments of this disclosure that the core network receives the first information sent by the access network device, and determines, based on the first information, whether to transmit the buffered downlink information, where the first information is related to configuration status of small data transmission of the terminal device. Based on the first information, the core network device can learn of configuration status of small data transmission of the terminal device, and determine, based on the configuration status, whether to transmit buffered downlink information to the terminal device, so as to perform small data transmission of the terminal device, thereby ensuring that the downlink information can arrive, reducing memory overheads of the core network, reducing paging of the terminal to a connected state by the core network due to insufficient memory, and also reducing signaling overheads and device power consumption.

FIG. 2c is a flowchart illustrating another data transmission method according to an embodiment of the present disclosure. As shown in FIG. 2c, the data transmission method may be applied to a core network device, and includes the following step(s).

In step S2101c, a first message sent by an access network device is received.

The first message carries first information, and the first information is related to configuration status of small data transmission of the terminal device.

In some embodiments, the core network device includes an access and mobility management function network element, a session management function network element, a user plane function network element, and the like.

In some embodiments, the access and mobility management function network element receives the first message sent by the access network device.

In some embodiments, the session management function network element receives the first message sent by the access network device.

In some embodiments, the user plane function network element receives the first message sent by the access network device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device.

In some embodiments, the first information type corresponding to the small data transmission configured for the terminal device includes but is not limited to uplink, downlink, or uplink and downlink.

In some embodiments, the threshold information indicates a data size, configured for the terminal device, of information that can be transmitted through small data transmission.

In some embodiments, the threshold information indicates a data volume, configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT configuration information of the terminal device.

It is specified in some embodiments of this disclosure that the core network device receives the first message sent by the access network device, and learns of the configuration status of the small data transmission of the terminal device based on the first message.

FIG. 2d is a flowchart illustrating yet another data transmission method according to an embodiment of the present disclosure. As shown in FIG. 2d, the data transmission method may be applied to a core network device, and includes the following step(s).

In step S2101d, a control plane message sent by an access network device is received.

The control plane message carries first information, and the first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device.

In some embodiments, the first information type corresponding to the small data transmission configured for the terminal device includes but is not limited to uplink, downlink, or uplink and downlink.

In some embodiments, the threshold information indicates a data size, configured for the terminal device, of information that can be transmitted through small data transmission.

In some embodiments, the threshold information indicates a data volume, configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT configuration information of the terminal device.

In some embodiments, the control plane message is a Next Generation Application Protocol (NGAP)) message.

It is specified in some embodiments of this disclosure that the core network device receives the control plane message sent by the access network device, and learns of the configuration status of the small data transmission of the terminal device based on the control plane message.

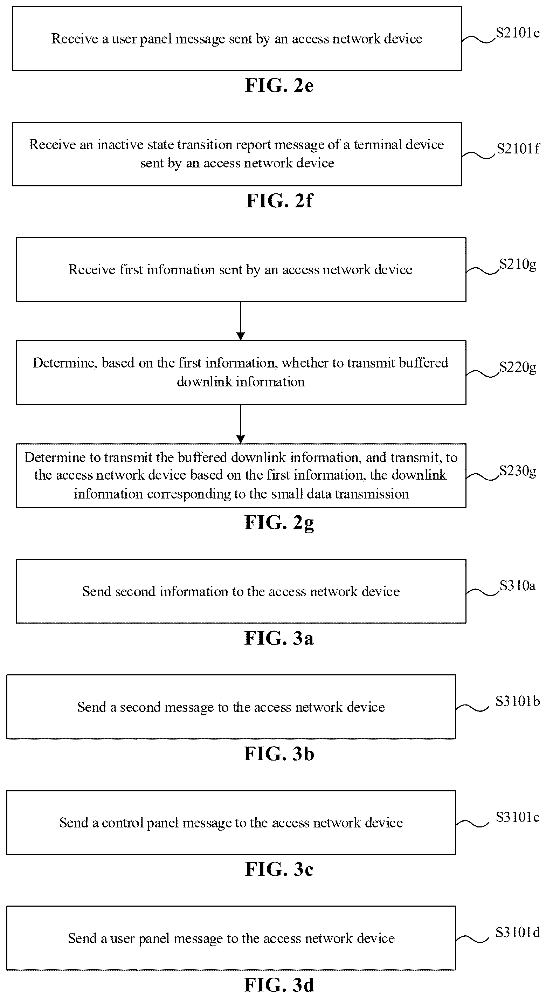

FIG. 2e is a flowchart illustrating yet another data transmission method according to an embodiment of the present disclosure. As shown in FIG. 2e, the data transmission method may be applied to a core network device, and includes the following step(s).

In step S2101e, a user plane message sent by an access network device is received.

The first message carries first information, and the first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device.

In some embodiments, the first information type corresponding to the small data transmission configured for the terminal device includes but is not limited to uplink, downlink, or uplink and downlink.

In some embodiments, the threshold information indicates a data size, configured for the terminal device, of information that can be transmitted through small data transmission.

In some embodiments, the threshold information indicates a data volume, configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT configuration information of the terminal device.

In some embodiments, the user plane message is a general packet radio service (GPRS) tunneling protocol-user plane (GTP-U) message. For example, a packet header of the user plane GTP-U message carries the first information.

It is specified in some embodiments of this disclosure that the core network device receives the user plane message sent by the access network device, and learns of the configuration status of the small data transmission of the terminal device based on the user plane message.

FIG. 2f is a flowchart illustrating yet another data transmission method according to an embodiment of the present disclosure. As shown in FIG. 2f, the data transmission method may be applied to a core network device, and includes the following step(s).

In step S2101f, an inactive state transition report message of the terminal device sent by the access network device is received.

The inactive state transition report message carries first information, and the first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device.

In some embodiments, the first information type corresponding to the small data transmission configured for the terminal device includes but is not limited to uplink, downlink, or uplink and downlink.

In some embodiments, the threshold information indicates a data size, configured for the terminal device, of information that can be transmitted through small data transmission.

In some embodiments, the threshold information indicates a data volume, configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT configuration information of the terminal device.

In some embodiments, the inactive state transition report message is sent after the access network device switches the terminal device to the inactive state.

It is specified in some embodiments of this disclosure that the core network device receives the inactive state transition report message of the terminal device sent by the access network device, and learns of the configuration status of the small data transmission of the terminal device based on the inactive state transition report message.

FIG. 2g is a flowchart illustrating yet another data transmission method according to an embodiment of the present disclosure. As shown in FIG. 2g, the data transmission method may be applied to a core network device, and includes the following step(s).

In step S210g, first information sent by an access network device is received.

The first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device.

In some embodiments, the core network device includes an access and mobility management function network element, a session management function network element, a user plane function network element, and the like.

In some embodiments, the access and mobility management function network element receives the first information sent by the access network device.

In some embodiments, the session management function network element receives the first information sent by the access network device.

In some embodiments, the user plane function network element receives the first information sent by the access network device.

In some embodiments, a first message sent by an access network device is received, where the first message carries the first information, and the first information is related to configuration status of small data transmission of a terminal device.

In some embodiments, the first message is a control plane message; and the core network device receives the control plane message sent by the access network device.

In some embodiments, the first message is a user plane message; and the core network device receives the user plane message sent by the access network device.

In some embodiments, the first message is an inactive state transition report message; and the core network device receives the inactive state transition report message of the terminal device sent by the access network device. In some embodiments, the inactive state transition report message is sent after the access network device switches the terminal device to the inactive state.

In step S220g, it is determined, based on the first information, whether to transmit the buffered downlink information.

In some embodiments, the downlink information includes signaling and/or data buffered for performing the core network based mobile terminated communication.

For an optional implementation of step S220g, reference may be made to an optional implementation of step S220 b in FIG. 2b and other associated parts in the embodiments involved in FIG. 2b, which will not be repeated here.

In step S230g, transmission of the buffered downlink information is determined, and the downlink information corresponding to the small data transmission is transmitted to the access network device based on the first information.

The core network device determines to transmit the buffered downlink information based on the first information, and then transmits, to the access network device based on the first information, the downlink information corresponding to the small data transmission configured for the terminal device.

Optionally, in a case of determining to transmit the buffered downlink information, the downlink information corresponding to the small data transmission is transmitted to the access network device based on the first information. Optionally, in response to determining to transmit the buffered downlink information, the downlink information corresponding to the small data transmission is transmitted to the access network device based on the first information. Optionally, upon determining to transmit the buffered downlink information, the downlink information corresponding to the small data transmission is transmitted to the access network device based on the first information.

It is specified in some embodiments of this disclosure that the core network device receives the first information sent by the access network device, determines, based on the first information, whether to transmit the buffered downlink information, and transmits, to the access network device based on the first information, the downlink information corresponding to the small data transmission, where the first information is related to configuration status of small data transmission of the terminal device. Based on the first information, the core network device can learn of configuration status of small data transmission of the terminal device, and determine, based on the configuration status, whether to transmit buffered downlink information to the terminal device and specific content of the transmitted downlink information, so as to perform small data transmission of the terminal device, thereby ensuring arrival of the downlink information, reducing memory overheads of the core network, reducing paging of the terminal to a connected state by the core network due to insufficient memory, and also reducing signaling overheads and device power consumption.

FIG. 3a is a flowchart illustrating yet another data transmission method according to an embodiment of the present disclosure. As shown in FIG. 3a, the data transmission method may be applied to a core network device, and includes the following step(s).

In step S310a, second information is sent to the access network device.

The second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the core network device includes an access and mobility management function network element, a session management function network element, a user plane function network element, and the like.

In some embodiments, the access and mobility management function network element sends the second information to the access network device.

In some embodiments, the session management function network element sends the second information to the access network device.

In some embodiments, the user plane function network element sends the second information to the access network device.

In some embodiments, a second message is sent to the access network device, where the second message carries the second information, and the second information is related to core network based mobile terminated communication.

In some embodiments, the second message is a control plane message; and the core network device sends the control plane message to the access network device.

In some embodiments, the second message is a user plane message; and the core network device sends the user plane message to the access network device.

Some embodiments of the present disclosure provide that the core network device sends the second information to the access network device, where the second information is related to the core network based mobile terminated communication. Based on the second information, the access network device can learn of status about the core network based mobile terminated communication at the core network side. Accordingly, it can be understood that when performing data transmission of the terminal device, the access network device may consider the status about the core network based mobile terminated communication at the core network side.

FIG. 3b is a flowchart illustrating yet another data transmission method according to an embodiment of the present disclosure. As shown in FIG. 3b, the data transmission method may be applied to a core network device, and includes the following step(s).

In step S3101b, a second message is sent to the access network device.

The second message carries second information, and the second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the core network device includes an access and mobility management function network element, a session management function network element, a user plane function network element, and the like.

In some embodiments, the access and mobility management function network element sends the second message to the access network device.

In some embodiments, the session management function network element sends the second message to the access network device.

In some embodiments, the user plane function network element sends the second message to the access network device.

It is specified in some embodiments of this disclosure that the core network device sends the second message to the access network device, to notify the access network device of the status related to core network based mobile terminated communication.

FIG. 3c is a flowchart illustrating yet another data transmission method according to an embodiment of the present disclosure. As shown in FIG. 3c, the data transmission method may be applied to a core network device, and includes the following step(s).

In step S3101c, a control plane message is sent to the access network device.

The control plane message carries second information, and the second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the control plane message is a next generation application protocol message.

Some embodiments of the present disclosure provide that the core network device sends the control plane message to the access network device to inform it of the situation related to the core network based mobile terminated communication.

FIG. 3d is a flowchart illustrating yet another data transmission method according to an embodiment of the present disclosure. As shown in FIG. 3d, the data transmission method may be applied to a core network device, and includes the following step(s).

In step S3101d, a user plane message is sent to the access network device.

The user plane message carries second information, and the second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the user plane message is a general packet radio service (GPRS) tunneling protocol-user plane (GTP-U) message, and for example, a packet header of the GTP-U message carries the second information.

Some embodiments of the present disclosure provide that the core network device sends the user plane message to the access network device to inform it of the situation related to the core network based mobile terminated communication.

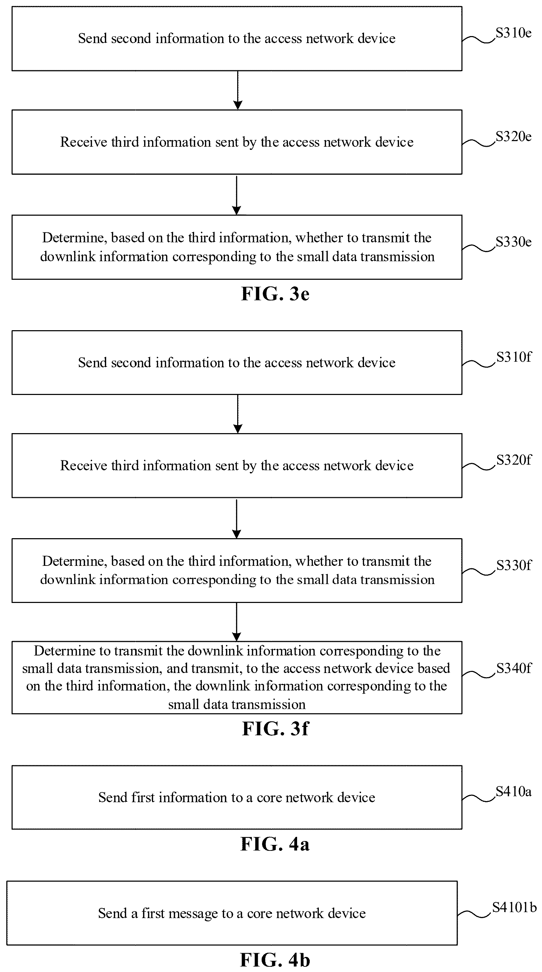

FIG. 3e is a flowchart illustrating yet another data transmission method according to an embodiment of the present disclosure. As shown in FIG. 3e, the data transmission method may be applied to a core network device, and includes the following step(s).

In step S310e, the second information is sent to the access network device.

The second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the core network device includes an access and mobility management function network element, a session management function network element, a user plane function network element, and the like.

In some embodiments, the access and mobility management function network element sends the second information to the access network device.

In some embodiments, the session management function network element sends the second information to the access network device.

In some embodiments, the user plane function network element sends the second information to the access network device.

In some embodiments, a second message is sent to the access network device, where the second message carries second information, and the second information is related to core network based mobile terminated communication.

In some embodiments, the second message is a control plane message; and the core network device sends the control plane message to the access network device.

In some embodiments, the second message is a user plane message; and the core network device sends the user plane message to the access network device.

In step S320e, third information sent by the access network device is received.

In some embodiments, the third information includes at least one of the following: third indication information for notifying the core network device that the terminal device is capable of receiving the downlink information; a third information type corresponding to the downlink information that the terminal device is capable of receiving; a fourth protocol data unit session identifier corresponding to the downlink information that the terminal device is capable of receiving; and a fourth quality of service flow identifier corresponding to the downlink information that the terminal device is capable of receiving.

In some embodiments, the access network device determines, based on the received second information, to send the third information to the core network device.

In step S330e, it is determined, based on the third information, whether to transmit downlink information corresponding to small data transmission.

Some embodiments of the present disclosure provide that the core network device sends the second information to the access network device, where the second information is related to the core network based mobile terminated communication; based on the second information, the access network device can know the situation related to the core network based mobile terminated communication; the core network device receives the third information analyzed, according to the second information, and sent by the access network device, and determines whether to transmit the downlink information corresponding to the small data transmission according to the third information, so that the receiving capability of the terminal device for the downlink information can be considered when performing the data transmission of the terminal device.

FIG. 3f is a flowchart illustrating yet another data transmission method according to an embodiment of the present disclosure. As shown in FIG. 3f, the data transmission method may be applied to a core network device, and includes the following step(s).

In step S310f, the second information is sent to the access network device.

The second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the core network device includes an access and mobility management function network element, a session management function network element, a user plane function network element, and the like.

In some embodiments, the access and mobility management function network element sends the second information to the access network device.

In some embodiments, the session management function network element sends the second information to the access network device.

In some embodiments, the user plane function network element sends the second information to the access network device.

In some embodiments, a second message is sent to the access network device, where the second message carries second information, and the second information is related to core network based mobile terminated communication.

In some embodiments, the second message is a control plane message; and the core network device sends the control plane message to the access network device.

In some embodiments, the second message is a user plane message; and the core network device sends the user plane message to the access network device.

In step S320f, third information sent by the access network device is received.

In some embodiments, the third information includes at least one of the following: third indication information for notifying the core network device that the terminal device is capable of receiving the downlink information; a third information type corresponding to the downlink information that the terminal device is capable of receiving; a fourth protocol data unit session identifier corresponding to the downlink information that the terminal device is capable of receiving; and a fourth quality of service flow identifier corresponding to the downlink information that the terminal device is capable of receiving.

In some embodiments, the access network device determines, based on the received second information, to send the third information to the core network device.

In step S330f, it is determined, based on the third information, whether to transmit downlink information corresponding to small data transmission.

In step S340f, it is determined to transmit the downlink information corresponding to the small data transmission, and the downlink information corresponding to the small data transmission is transmitted to the access network device based on the third information.

The core network device determines, based on the third information, to transmit the downlink information corresponding to the small data transmission, and transmits, to the access network device based on the third information, the downlink information corresponding to the small data transmission configured for the terminal device.

Optionally, in a case of determining to transmit the downlink information corresponding to the small data transmission, the downlink information corresponding to the small data transmission is transmitted to the access network device based on the third information. Optionally, in response to determining to transmit the downlink information corresponding to the small data transmission, the downlink information corresponding to the small data transmission is transmitted to the access network device based on the third information. Optionally, when it is determined to transmit the downlink information corresponding to the small data transmission, the downlink information corresponding to the small data transmission is transmitted to the access network device based on the third information.

Some embodiments of the present disclosure provide that the core network device sends the second information to the access network device, where the second information is related to the core network based mobile terminated communication; based on the second information, the access network device can know the situation related to the core network based mobile terminated communication; then the core network device receives the third information analyzed, according to the second information, and sent by the access network device, and determines whether to transmit the downlink information corresponding to the small data transmission according to the third information, so that the receiving capability of the terminal device for the downlink information can be considered when performing the data transmission of the terminal device, and the downlink information corresponding to the small data transmission configured for the terminal device can be transmitted according to the third information.

FIG. 4a is a flowchart illustrating yet another data transmission method according to an embodiment of the present disclosure. As shown in FIG. 4a, the data transmission method may be applied to an access network device, and includes the following step(s).

In step S410 a, first information is sent to a core network device.

The first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device.

In some embodiments, the first information type corresponding to the small data transmission configured for the terminal device includes but is not limited to uplink, downlink, or uplink and downlink.

In some embodiments, the threshold information indicates a data size, configured for the terminal device, of information that can be transmitted through small data transmission.

In some embodiments, the threshold information indicates a data volume, configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT configuration information of the terminal device.

In some embodiments, the core network device includes an access and mobility management function network element, a session management function network element, a user plane function network element, and the like.

In some embodiments, the first information is sent to an access and mobility management function network element.

In some embodiments, the first information is sent to a session management function network element.

In some embodiments, the first information is sent to a user plane function network element.

In some embodiments, a first message is sent to the core network device, where the first message carries first information, and the first information is related to configuration status of small data transmission of a terminal device.

In some embodiments, the first message is a control plane message; and the access network device sends the control plane message to the core network device.

In some embodiments, the first message is a user plane message; and the access network device sends the user plane message to the core network device.

It is specified in some embodiments of this disclosure that the access network device sends the first information to the core network device, where the first information is related to configuration status of small data transmission of the terminal device. Based on the first information, the core network device can learn of configuration status of small data transmission of the terminal device.

FIG. 4b is a flowchart illustrating yet another data transmission method according to an embodiment of the present disclosure. As shown in FIG. 4b, the data transmission method may be applied to an access network device, and includes the following step(s).

In step S4101b, a first message is sent to the core network device.

The first message carries the first information, and the first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit (PDU) session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device.

In some embodiments, the first information type corresponding to the small data transmission configured for the terminal device includes but is not limited to uplink, downlink, or uplink and downlink.

In some embodiments, the threshold information indicates a data size, configured for the terminal device, of information that can be transmitted through small data transmission.

In some embodiments, the threshold information indicates a data volume, configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT configuration information of the terminal device.

In some embodiments, the core network device includes an access and mobility management function network element, a session management function network element, a user plane function network element, and the like.

In some embodiments, the first message is sent to an access and mobility management function network element.

In some embodiments, the first message is sent to a session management function network element.

In some embodiments, the first message is sent to a user plane function network element.

It is specified in some embodiments of this disclosure that the access network device sends the first message to the core network device, to notify the core network device of configuration status of the access network device for small data transmission of the terminal device.

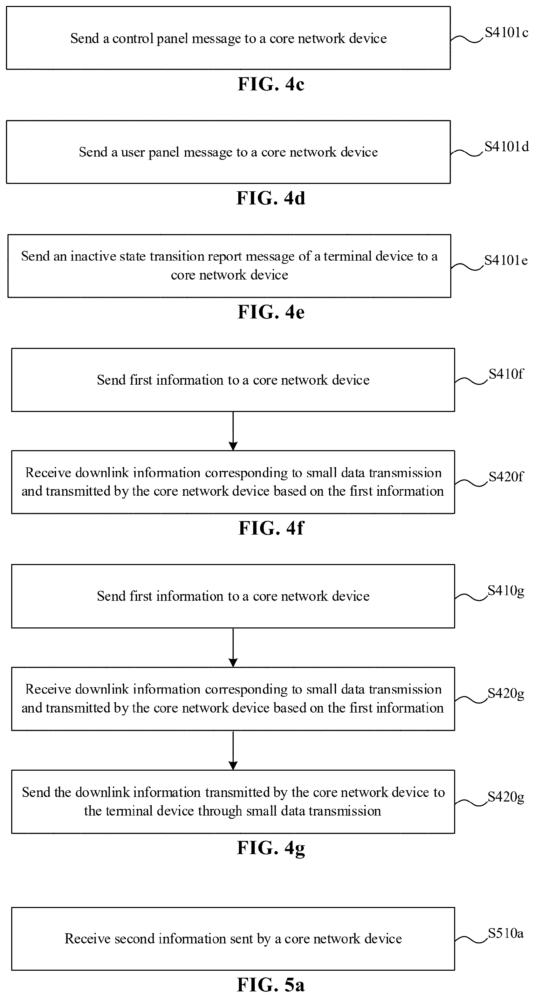

FIG. 4c is a flowchart illustrating yet another data transmission method according to an embodiment of the present disclosure. As shown in FIG. 4c, the data transmission method may be applied to an access network device, and includes the following step(s).

In step S4101c, a control plane message is sent to the core network device.

The control plane message carries the first information, and the first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit (PDU) session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device.

In some embodiments, the first information type corresponding to the small data transmission configured for the terminal device includes but is not limited to uplink, downlink, or uplink and downlink.

In some embodiments, the threshold information indicates a data size, configured for the terminal device, of information that can be transmitted through small data transmission.

In some embodiments, the threshold information indicates a data volume, configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT configuration information of the terminal device.

In some embodiments, the control plane message is a next generation application protocol message.

It is specified in some embodiments of this disclosure that the access network device sends the control plane message to the core network device, to notify the core network device of configuration status of the access network device for small data transmission of the terminal device.

FIG. 4d is a flowchart illustrating yet another data transmission method according to an embodiment of the present disclosure. As shown in FIG. 4d, the data transmission method may be applied to an access network device, and includes the following step(s).

In step S4101d, a user plane message is sent to the core network device.

The user plane message carries first information, and the first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit (PDU) session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device.

In some embodiments, the first information type corresponding to the small data transmission configured for the terminal device includes but is not limited to uplink, downlink, or uplink and downlink.

In some embodiments, the threshold information indicates a data size, configured for the terminal device, of information that can be transmitted through small data transmission.

In some embodiments, the threshold information indicates a data volume, configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT configuration information of the terminal device.

In some embodiments, the user plane message is a general packet radio service (GPRS) tunneling protocol-user plane (GTP-U) message, and for example, a packet header of the GTP-U message carries the first information.

In some embodiments of this disclosure, the access network device sends the user plane message to the core network device, to notify the core network device of configuration status of the access network device for small data transmission of the terminal device.

FIG. 4e is a flowchart illustrating yet another data transmission method according to an embodiment of the present disclosure. As shown in FIG. 4e, the data transmission method may be applied to an access network device, and includes the following step(s).

In step S4101e, an inactive state transition report message of the terminal device is sent to the core network device.

The inactive state transition report message carries first information, and the first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device.

In some embodiments, the first information type corresponding to the small data transmission configured for the terminal device includes but is not limited to uplink, downlink, or uplink and downlink.

In some embodiments, the threshold information indicates a data size, configured for the terminal device, of information that can be transmitted through small data transmission.

In some embodiments, the threshold information indicates a data volume, configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT configuration information of the terminal device.

In some embodiments, the inactive state transition report message is sent after the access network device switches the terminal device to the inactive state.

It is specified in some embodiments of this disclosure that the access network device sends the inactive state transition report message to the core network device, to notify the core network device of configuration status of the access network device for small data transmission of the terminal device.

FIG. 4f is a flowchart illustrating yet another data transmission method according to an embodiment of the present disclosure. As shown in FIG. 4f, the data transmission method may be applied to an access network device, and includes the following step(s).

In step S410f, first information is sent to a core network device.

The first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device.

In some embodiments, the first information type corresponding to the small data transmission configured for the terminal device includes but is not limited to uplink, downlink, or uplink and downlink.

In some embodiments, the threshold information indicates a data size, configured for the terminal device, of information that can be transmitted through small data transmission.

In some embodiments, the threshold information indicates a data volume, configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT configuration information of the terminal device.

In some embodiments, the core network device includes an access and mobility management function network element, a session management function network element, a user plane function network element, and the like.

In some embodiments, the first information is sent to an access and mobility management function network element.

In some embodiments, the first information is sent to a session management function network element.

In some embodiments, the first information is sent to a user plane function network element.

In some embodiments, a first message is sent to the core network device, where the first message carries first information, and the first information is related to configuration status of small data transmission of a terminal device.

In some embodiments, the first message is a control plane message; and the access network device sends the control plane message to the core network device.

In some embodiments, the first message is a user plane message; and the access network device sends the user plane message to the core network device.

In step S420f, downlink information, corresponding to small data transmission, that is transmitted by the core network device based on the first information is received.

The downlink information that is transmitted by the core network device based on the first information and that corresponds to small data transmission configured for the terminal device is received.

It is specified in some embodiments of this disclosure that the access network device sends the first information to the core network device, so that the core network device determines, based on the first information, whether to transmit the buffered downlink information, and transmits, to the access network device based on the first information, the downlink information corresponding to the small data transmission, where the first information is related to configuration status of small data transmission of the terminal device. Based on the first information, the core network device can learn of configuration status of small data transmission of the terminal device, and determine, based on the configuration status, whether to transmit buffered downlink information to the terminal device and specific content of the transmitted downlink information, so as to perform small data transmission of the terminal device, thereby ensuring arrival of the downlink information, reducing memory overheads of the core network, reducing paging of the terminal to a connected state by the core network due to insufficient memory, and also reducing signaling overheads and device power consumption.

FIG. 4g is a flowchart illustrating yet another data transmission method according to an embodiment of the present disclosure. As shown in FIG. 4g, the data transmission method may be applied to an access network device, and includes the following step(s).

In step S410g, the first information is sent to the core network device.

The first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device.

In some embodiments, the first information type corresponding to the small data transmission configured for the terminal device includes but is not limited to uplink, downlink, or uplink and downlink.

In some embodiments, the threshold information indicates a data size, configured for the terminal device, of information that can be transmitted through small data transmission.

In some embodiments, the threshold information indicates a data volume, configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT configuration information of the terminal device.

In some embodiments, the core network device includes an access and mobility management function network element, a session management function network element, a user plane function network element, and the like.

In some embodiments, the first information is sent to an access and mobility management function network element.

In some embodiments, the first information is sent to a session management function network element.

In some embodiments, the first information is sent to a user plane function network element.

In some embodiments, a first message is sent to a core network device, where the first message carries first information, and the first information is related to configuration status of small data transmission of a terminal device.

In some embodiments, the first message is a control plane message; and the access network device sends the control plane message to the core network device.

In some embodiments, the first message is a user plane message; and the access network device sends the user plane message to the core network device.

In step S420g, downlink information, corresponding to small data transmission, that is transmitted by the core network device based on the first information is received.

The downlink information that is transmitted by the core network device based on the first information and that corresponds to small data transmission configured for the terminal device is received.

In step S430g, the downlink information transmitted by the core network device is transmitted to the terminal device through small data transmission.

The downlink information that is transmitted by the core network device and that corresponds to small data transmission configured for the terminal device is sent to the terminal device through small data transmission.

It is specified in some embodiments of this disclosure that the access network device sends the first information to the core network device, so that the core network device determines, based on the first information, whether to transmit the buffered downlink information, and transmits, to the access network device based on the first information, the downlink information corresponding to the small data transmission, where the first information is related to configuration status of small data transmission of the terminal device. Based on the first information, the core network device can learn of configuration status of small data transmission of the terminal device, and determine, based on the configuration status, whether to transmit buffered downlink information to the terminal device and specific content of the transmitted downlink information, and the access network device transmits the downlink information to the terminal device after receiving the downlink information, so as to perform small data transmission of the terminal device, thereby ensuring that the downlink information can arrive, reducing memory overheads of the core network, reducing paging of the terminal by the core network to a connected state due to insufficient memory, and reducing signaling overheads and device power consumption.

FIG. 5a is a flowchart illustrating yet another data transmission method according to an embodiment of the present disclosure. As shown in FIG. 5a, the data transmission method may be applied to an access network device, and includes the following step(s).

In step S510a, second information sent by the core network device is received.

The second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the core network device includes an access and mobility management function network element, a session management function network element, a user plane function network element, and the like.

In some embodiments, the second information sent by the access and mobility management function network element is received.

In some embodiments, the second information sent by the session management function network element is received.

In some embodiments, the second information sent by the user plane function network element is received.

In some embodiments, a second message sent by the core network device is received, where the second message carries second information, and the second information is related to core network based mobile terminated communication.

In some embodiments, the second message is a control plane message; and the access network device receives the control plane message sent by the core network device.

In some embodiments, the second message is a user plane message; and the access network device receives the user plane message sent by the core network device.

Some embodiments of the present disclosure provide that the access network device receives the second information sent by the core network device, where the second information is related to the core network based mobile terminated communication. Based on the second information, the access network device can learn of status about the core network based mobile terminated communication at the core network side. Accordingly, it can be understood that when performing data transmission of the terminal device, the access network device may consider the status about the core network based mobile terminated communication at the core network side.

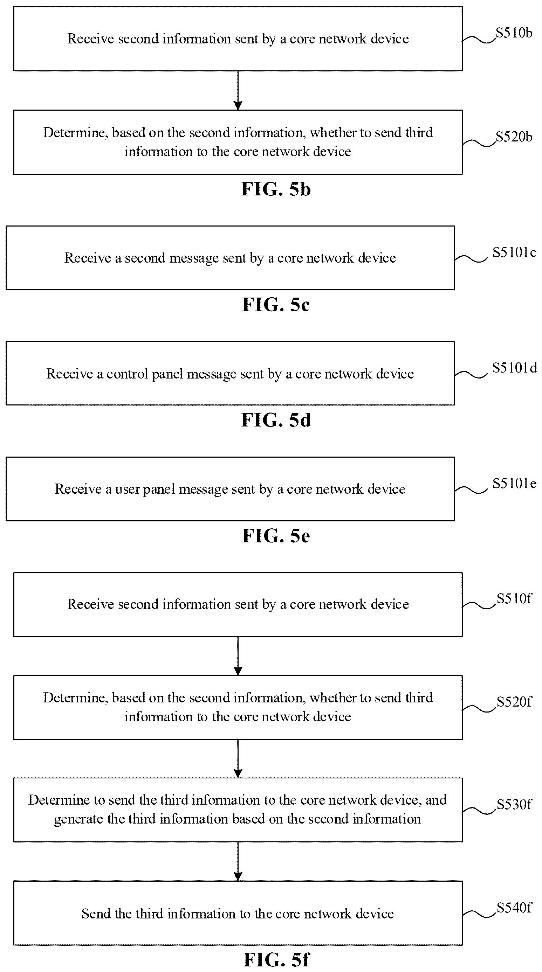

FIG. 5b is a flowchart illustrating yet another data transmission method according to an embodiment of the present disclosure. As shown in FIG. 5b, the data transmission method may be applied to an access network device, and includes the following step(s).

In step S510b, second information sent by the core network device is received.

The second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the core network device includes an access and mobility management function network element, a session management function network element, a user plane function network element, and the like.

In some embodiments, the second information sent by the access and mobility management function network element is received.

In some embodiments, the second information sent by the session management function network element is received.

In some embodiments, the second information sent by the user plane function network element is received.

In some embodiments, a second message sent by the core network device is received, where the second message carries second information, and the second information is related to core network based mobile terminated communication.

In some embodiments, the second message is a control plane message; and the access network device receives the control plane message sent by the core network device.

In some embodiments, the second message is a user plane message; and the access network device receives the user plane message sent by the core network device.

In step S520b, it is determined, based on the second information, whether to send third information to the core network device.

The third information is used for notifying the core network device that the terminal device is capable of receiving downlink information, and the downlink information includes signaling and/or data buffered by the core network device for performing the core network based mobile terminated communication.

In some embodiments, for determining, based on the second information, whether to send the third information to the core network device, it is determined to send the third information to the core network device in at least one of the following cases: there is downlink information buffered at the core network device; information in the downlink information belongs to a small data transmission type corresponding to small data transmission configured for the terminal device; a buffer time represented by time information corresponding to the downlink information is less than or equal to an extended discontinuous reception cycle represented by an extended discontinuous reception cycle parameter configured for the terminal device; a data size of information belonging to the small data transmission type in the downlink information is less than or equal to a data threshold corresponding to small data transmission configured for the terminal device; a third protocol data unit session identifier of the information belonging to the small data transmission type in the downlink information is consistent with a first protocol data unit session identifier corresponding to small data transmission configured for the terminal device; and a third quality of service flow identifier of the information belonging to the small data transmission type in the downlink information is consistent with a first quality of service flow identifier corresponding to small data transmission configured for the terminal device. Accordingly, it is determined to send the third information to the core network device.

In some embodiments, whether there is downlink information buffered at the core network device is determined based on second indication information.

In some embodiments, it is determined, based on a second information type, that the information in the downlink information belongs to the small data transmission type corresponding to small data transmission configured for the terminal device.

In some embodiments, the third information includes at least one of the following: third indication information for notifying the core network device that the terminal device is capable of receiving the downlink information; a third information type corresponding to the downlink information that the terminal device is capable of receiving; a fourth protocol data unit session identifier corresponding to the downlink information that the terminal device is capable of receiving; and a fourth quality of service flow identifier corresponding to the downlink information that the terminal device is capable of receiving.

In some embodiments of this disclosure, the access network device receives the second information sent by the core network device, and determines, based on the second information, whether to send the third information to the core network device, where the second information is related to core network based mobile terminated communication, and the third information is used for notifying the core network device that the terminal device can receive the downlink information. Based on the second information, the access network device can learn of a status about the core network based mobile terminated communication at the core network side. Accordingly, when performing data transmission of the terminal device, the access network device may consider the status about the core network based mobile terminated communication at the core network side, and determine whether to send the third information for notifying the core network device that the terminal device can receive the downlink information.

FIG. 5c is a flowchart illustrating yet another data transmission method according to an embodiment of the present disclosure. As shown in FIG. 5c, the data transmission method may be applied to an access network device, and includes the following step(s).

In step S5101c, a second message sent by the core network device is received.

The second message carries second information, and the second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the core network device includes an access and mobility management function network element, a session management function network element, a user plane function network element, and the like.

In some embodiments, a second message sent by the access and mobility management function network element is received.

In some embodiments, a second message sent by the session management function network element is received.

In some embodiments, a second message sent by the user plane function network element is received.

Some embodiments of the present disclosure provide that the access network device receives the second message sent by the core network device, so as to acquire the situation related to core network based mobile terminated communication at the core network side.

FIG. 5d is a flowchart illustrating yet another data transmission method according to an embodiment of the present disclosure. As shown in FIG. 5d, the data transmission method may be applied to an access network device, and includes the following step(s).

In step S5101d, a control plane message sent by a core network device is received.

The control plane message carries second information, and the second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the control plane message is a next generation application protocol message.

Some embodiments of the present disclosure provide that the access network device receives the control plane message sent by the core network device, so as to acquire the situation related to core network based mobile terminated communication at the core network side.

FIG. 5e is a flowchart illustrating yet another data transmission method according to an embodiment of the present disclosure. As shown in FIG. 5e, the data transmission method may be applied to an access network device, and includes the following step(s).

In step S5101e, a user plane message sent by a core network device is received.

The user plane message carries second information, and the second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the user plane message is a general packet radio service (GPRS) tunneling protocol-user plane (GTP-U) message, and for example, a packet header of the GTP-U message carries the second information.

Some embodiments of the present disclosure provide that the access network device receives the user plane message sent by the core network device, so as to acquire the situation related to core network based mobile terminated communication at the core network side.

FIG. 5f is a flowchart illustrating yet another data transmission method according to an embodiment of the present disclosure. As shown in FIG. 5f, the data transmission method may be applied to an access network device, and includes the following step(s).

In step S510f, second information sent by the core network device is received.

The second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the core network device includes an access and mobility management function network element, a session management function network element, a user plane function network element, and the like.

In some embodiments, the second information sent by the access and mobility management function network element is received.

In some embodiments, the second information sent by the session management function network element is received.

In some embodiments, the second information sent by the user plane function network element is received.

In some embodiments, a second message sent by the core network device is received, where the second message carries second information, and the second information is related to core network based mobile terminated communication.

In some embodiments, the second message is a control plane message; and the access network device receives the control plane message sent by the core network device.

In some embodiments, the second message is a user plane message; and the access network device receives the user plane message sent by the core network device.

In step S520f, it is determined, based on the second information, whether to send the third information to the core network device.

The third information is used for notifying the core network device that the terminal device is capable of receiving downlink information, and the downlink information includes signaling and/or data buffered by the core network device for performing the core network based mobile terminated communication.

For an optional implementation of step S520f, optional implementation of step S520b in FIG. 5b and another associated part in the embodiments of FIG. 5b can be referred to, and details are not described herein again.

In step S530f, it is determined to send third information to the core network device, and the third information is generated based on the second information.

In some embodiments, the third information includes at least one of the following: third indication information for notifying the core network device that the terminal device is capable of receiving the downlink information; a third information type corresponding to the downlink information that the terminal device is capable of receiving; a fourth protocol data unit session identifier corresponding to the downlink information that the terminal device is capable of receiving; and a fourth quality of service flow identifier corresponding to the downlink information that the terminal device is capable of receiving.

In step S540f, the third information is sent to the core network device.

In some embodiments of this disclosure, the access network device receives the second information sent by the core network device, and determines, based on the second information, whether to send the third information to the core network device, where the second information is related to core network based mobile terminated communication, and the third information is used for notifying the core network device that the terminal device can receive the downlink information. Based on the second information, the access network device can learn of the status about the core network based mobile terminated communication at the core network side. Accordingly, when performing data transmission of the terminal device, the access network device may consider the status about the core network based mobile terminated communication at the core network side, and send the third information for notifying the core network device that the terminal device can receive the downlink information.

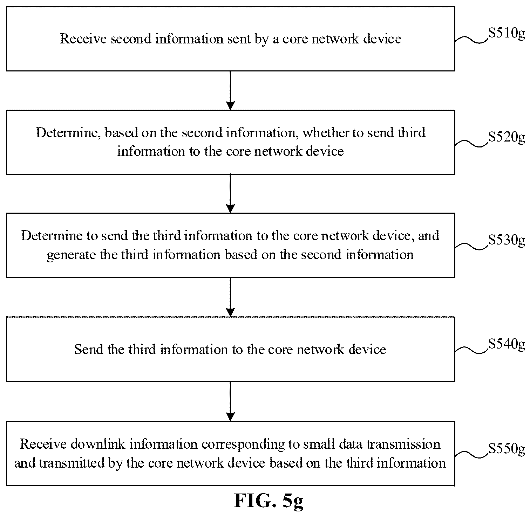

FIG. 5g is a flowchart illustrating yet another data transmission method according to an embodiment of the present disclosure. As shown in FIG. 5g, the data transmission method may be applied to an access network device, and includes the following step(s).

In step S510g, second information sent by the core network device is received.

The second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the core network device includes an access and mobility management function network element, a session management function network element, a user plane function network element, and the like.

In some embodiments, the second information sent by the access and mobility management function network element is received.

In some embodiments, the second information sent by the session management function network element is received.

In some embodiments, the second information sent by the user plane function network element is received.

In some embodiments, a second message sent by the core network device is received, where the second message carries second information, and the second information is related to core network based mobile terminated communication.

In some embodiments, the second message is a control plane message; and the access network device receives the control plane message sent by the core network device.

In some embodiments, the second message is a user plane message; and the access network device receives the user plane message sent by the core network device.

In step S520g, it is determined, based on the second information, whether to send the third information to the core network device.

The third information is used for notifying the core network device that the terminal device is capable of receiving downlink information, and the downlink information includes signaling and/or data buffered by the core network device for performing the core network based mobile terminated communication.

For an optional implementation of step S520g, optional implementation of step S520b in FIG. 5b and another associated part in the embodiments of FIG. 5b can be referred to, and details are not described herein again.

In step S530g, it is determined to send the third information to the core network device, and the third information is generated based on the second information.

In some embodiments, the third information includes at least one of the following: third indication information for notifying the core network device that the terminal device is capable of receiving the downlink information; a third information type corresponding to the downlink information that the terminal device is capable of receiving; a fourth protocol data unit session identifier corresponding to the downlink information that the terminal device is capable of receiving; and a fourth quality of service flow identifier corresponding to the downlink information that the terminal device is capable of receiving.

In step S540g, the third information is sent to the core network device.

In step S550g, downlink information, corresponding to small data transmission, that is transmitted by the core network device based on the third information is received.

The downlink information that is transmitted by the core network device based on the third information and that corresponds to small data transmission configured for the terminal device is received.

In some embodiments of this disclosure, the access network device receives the second information sent by the core network device, and determines, based on the second information, whether to send the third information to the core network device, where the second information is related to core network based mobile terminated communication, and the third information is used for notifying the core network device that the terminal device can receive the downlink information. Based on the second information, the access network device can learn of the status about the core network based mobile terminated communication at the core network side. Accordingly, when performing data transmission of the terminal device, the access network device may consider the status about the core network based mobile terminated communication at the core network side, and send the third information for notifying the core network device that the terminal device can receive the downlink information, so that when performing data transmission of the terminal device, the core network device can consider a capability of receiving the downlink information by the terminal device, and transmit the downlink information corresponding to the small data transmission.

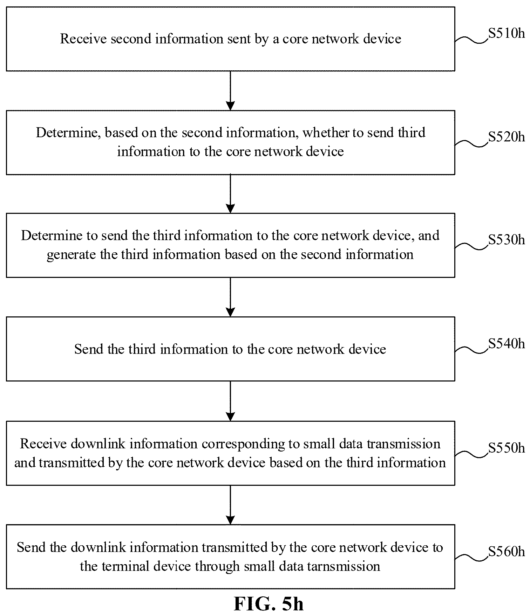

FIG. 5h is a flowchart illustrating yet another data transmission method according to an embodiment of the present disclosure. As shown in FIG. 5h, the data transmission method may be applied to an access network device, and includes the following step(s).

In step S510h, second information sent by the core network device is received.

The second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the core network device includes an access and mobility management function network element, a session management function network element, a user plane function network element, and the like.

In some embodiments, the second information sent by the access and mobility management function network element is received.

In some embodiments, the second information sent by the session management function network element is received.

In some embodiments, the second information sent by the user plane function network element is received.

In some embodiments, a second message sent by the core network device is received, where the second message carries second information, and the second information is related to core network based mobile terminated communication.

In some embodiments, the second message is a control plane message; and the access network device receives the control plane message sent by the core network device.

In some embodiments, the second message is a user plane message; and the access network device receives the user plane message sent by the core network device.

In step S520h, it is determined, based on the second information, whether to send the third information to the core network device.

The third information is used for notifying the core network device that the terminal device is capable of receiving downlink information, and the downlink information includes signaling and/or data buffered by the core network device for performing the core network based mobile terminated communication.

For an optional implementation of step S520h, optional implementation of step S520b in FIG. 5b and another associated part in the embodiments of FIG. 5b can be referred to, and details are not described herein again.

In step S530h, it is determined to send third information to the core network device, and the third information is generated based on the second information.

In some embodiments, the third information includes at least one of the following: third indication information for notifying the core network device that the terminal device is capable of receiving the downlink information; a third information type corresponding to the downlink information that the terminal device is capable of receiving; a fourth protocol data unit session identifier corresponding to the downlink information that the terminal device is capable of receiving; and a fourth quality of service flow identifier corresponding to the downlink information that the terminal device is capable of receiving.

In step S540h, the third information is sent to the core network device.

In step S550h, downlink information, corresponding to small data transmission, that is transmitted by the core network device based on the third information is received.

The downlink information that is transmitted by the core network device based on the third information and that corresponds to small data transmission configured for the terminal device is received.

In step S560h, the downlink information transmitted by the core network device is sent to the terminal device through small data transmission.

The downlink information that is transmitted by the core network device and that corresponds to small data transmission configured for the terminal device is sent to the terminal device through small data transmission.

In some embodiments of this disclosure, the access network device receives the second information sent by the core network device, and determines, based on the second information, whether to send the third information to the core network device, where the second information is related to core network based mobile terminated communication, and the third information is used for notifying the core network device that the terminal device can receive the downlink information. Based on the second information, the access network device can learn of the status about the core network based mobile terminated communication at the core network side, and when performing data transmission of the terminal device, the access network device may consider the status about the core network based mobile terminated communication at the core network side, and send the third information for notifying the core network device that the terminal device can receive the downlink information. Accordingly, when performing data transmission of the terminal device, the core network device can consider a capability of receiving the downlink information by the terminal device, and transmit the downlink information corresponding to the small data transmission; and the access network device sends, to the terminal device by using the small data transmission, the downlink information transmitted by the core network device, so as to perform small data transmission of the terminal device, thereby ensuring that the downlink information can arrive and reducing power consumption of the terminal device.

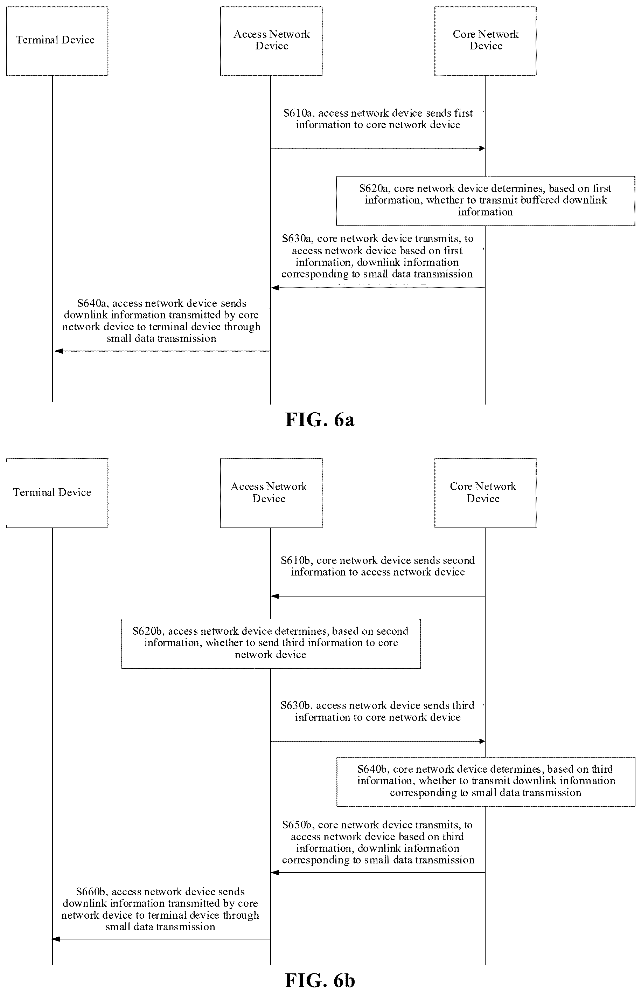

FIG. 6a is a flowchart illustrating yet another data transmission method according to an embodiment of the present disclosure. As shown in FIG. 6a, the data transmission method may be used in the communications system shown in FIG. 1a, and the method includes the following step(s).

In step S610a, the access network device sends first information to the core network device.

The first information is related to configuration status of the access network device for small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device.

In some embodiments, the first information type indicates an information type, configured for the terminal device, of information that can be transmitted in small data transmission.

In some embodiments, the first information type corresponding to the small data transmission configured for the terminal device includes but is not limited to signaling, data, or signaling and data.

In some embodiments, the first information type indicates an information transmission direction supported by small data transmission configured for the terminal device.

In some embodiments, the first information type corresponding to the small data transmission configured for the terminal device includes but is not limited to uplink, downlink, or uplink and downlink.

In some embodiments, the threshold information indicates a data size, configured for the terminal device, of information that can be transmitted through small data transmission.

In some embodiments, the threshold information indicates a data volume, configured for the terminal device, of information that can be transmitted through small data transmission.

In some embodiments, the first protocol data unit session identifier indicates a protocol data unit session that supports small data transmission configured for the terminal device.

In some embodiments, the first quality of service flow identifier indicates a quality of service flow that supports small data transmission configured for the terminal device.

In some embodiments, the first information includes MT-SDT and/or MO-SDT configuration information of the terminal device.

In some embodiments, the core network device includes an access and mobility management function network element, a session management function network element, a user plane function network element, and the like.

In some embodiments, the access network device sends the first information to an access and mobility management function network element.

In some embodiments, the access network device sends the first information to a session management function network element.

In some embodiments, the access network device sends the first information to a user plane function network element.

In some embodiments, the access network device sends a first message to the core network device, where the first message carries first information, and the first information is related to configuration status of small data transmission of the terminal device.

In some embodiments, the first message is a control plane message; and the access network device sends the control plane message to the core network device.

In some embodiments, the first message is a user plane message; and the access network device sends the user plane message to the core network device.

In some embodiments, the first message is an inactive state transition report message; and the access network device sends the inactive state transition report message of the terminal device to the core network device.

In some embodiments, the inactive state transition report message is sent after the access network device switches the terminal device to the inactive state.

In some embodiments, the core network device is configured with core network based mobile terminated communication.

In some embodiments, if the terminal device supports small data transmission, the terminal device can receive, in the inactive state, downlink information corresponding to small data transmission. On a side of the core network device, when downlink information arrives, for the terminal device in the inactive state, especially for the terminal device whose configured extended discontinuous reception cycle is greater than or equal to 10.24 seconds and in the inactive state, instead of sending the downlink information to the access network device to transmit the downlink information to the terminal device, the core network device evaluates reachability of the terminal device, performs a core network based mobile terminated communication, and then sends the downlink information to the terminal device in the connected state, so that small data transmission of the terminal device is not performed.

In step S620a, the core network device determines, based on the first information, whether to transmit the buffered downlink information.

In some embodiments, the downlink information includes signaling and/or data buffered by the core network device for performing the core network based mobile terminated communication.

For an optional implementation of step S620a, reference may be made to an optional implementation of step S220b in FIG. 2b and other associated parts in the embodiments involved in FIG. 2b, and details are not described herein again.

If the core network device determines to transmit the buffered downlink information based on the first information, step S630a is performed.

In step S630a, the core network device transmits downlink information corresponding to small data transmission to the access network device based on the first information.

In step S640a, the access network device sends, to the terminal device through small data transmission, the downlink information transmitted by the core network device.

It is specified in some embodiments of this disclosure that the access network device sends the first information to the core network device, where the first information is related to configuration status of the access network device for small data transmission of the terminal device; the core network device determines, based on the first information, whether to transmit buffered downlink information; then the core network device transmits, to the access network device based on the first information, downlink information corresponding to the small data transmission; and the access network device sends, to the terminal device by using the small data transmission, the downlink information transmitted by the core network device. Therefore, the core network device can learn of configuration status of small data transmission of the terminal device, thereby avoiding a conflict between the small data transmission and core network based mobile terminated communication.

FIG. 6b is a flowchart illustrating yet another data transmission method according to an embodiment of the present disclosure. As shown in FIG. 6b, the data transmission method may be used in the communications system shown in FIG. 1a, and the method includes the following step(s).

In step S610b, the core network device sends the second information to the access network device.

The second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the core network device includes an access and mobility management function network element, a session management function network element, a user plane function network element, and the like.

In some embodiments, the access and mobility management function network element sends the second information to the access network device.

In some embodiments, the session management function network element sends the second information to the access network device.

In some embodiments, the user plane function network element sends the second information to the access network device.

In some embodiments, the core network device sends a second message to the access network device, where the second message carries second information, and the second information is related to core network based mobile terminated communication.

In some embodiments, the second message is a control plane message; and the core network device sends the control plane message to the access network device.

In some embodiments, the second message is a user plane message; and the core network device sends the user plane message to the access network device.

In step S620b, the access network device determines, based on the second information, whether to send the third information to the core network device.

The third information is used for notifying the core network device that the terminal device is capable of receiving downlink information, and the downlink information includes signaling and/or data buffered by the core network device for performing the core network based mobile terminated communication.

For an optional implementation of step S620b, optional implementation of step S520b in FIG. 5b and another associated part in the embodiments of FIG. 5b can be referred to, and details are not described herein again.

If the access network device determines, based on the second information, to send the third information to the core network device, step S630b is performed.

In step S630b, the access network device sends third information to the core network device.

The third information includes at least one of the following: third indication information for notifying the core network device that the terminal device is capable of receiving the downlink information; a third information type corresponding to the downlink information that the terminal device is capable of receiving; a fourth protocol data unit session identifier corresponding to the downlink information that the terminal device is capable of receiving; and a fourth quality of service flow identifier corresponding to the downlink information that the terminal device is capable of receiving.

In step S640b, the core network device determines, based on the third information, whether to transmit the downlink information corresponding to the small data transmission.

If the core network device determines, based on the third information, to transmit the downlink information corresponding to the small data transmission, step S650b is performed.

In step S650b, the core network device transmits, to the access network device based on the third information, the downlink information corresponding to the small data transmission.

In step S660b, the access network device sends, to the terminal device through small data transmission, the downlink information transmitted by the core network device.

Some embodiments of the present disclosure provide that the core network device sends second information to the access network device, where the second information is related to core network based mobile terminated communication; the access network device determines, based on the second information, whether to send third information to the core network device, where the third information is used for notifying the core network device that the terminal device can receive downlink information. The access network device sends the third information to the core network device; the core network device determines, based on the third information, whether to transmit downlink information corresponding to small data transmission; then the core network device transmits the downlink information corresponding to the small data transmission to the access network device based on the third information; and the access network device sends the downlink information transmitted by the core network device to the terminal device through the small data transmission. Therefore, the access network device can learn of a status about core network based mobile terminated communication, so as to determine whether to notify the core network of the receiving capability of the terminal device, and the core network device can learn of configuration status of small data transmission of the terminal device, and determine whether to transmit downlink information, thereby avoiding a conflict between small data transmission and core network based mobile terminated communication.

The following is still another data transmission method shown in an embodiment of the present disclosure, and the method includes the following step(s).
1. The base station sends the first information to the first network element by using a first message. The first message may be any one of a control plane message, a user plane message, and an inactive state transition report message, the control plane message may be a next-generation application protocol message, the user plane message may be a general packet radio service (GPRS) tunneling protocol-user plane (GTP-U) message, and a packet header of the user plane message carries the first information. The first information may include at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit session identifier corresponding to small data transmission configured for the terminal device; and a first quality of service flow identifier corresponding to small data transmission configured for the terminal device. The first network element is one of an access and mobility management function network element, a session management function network element, and a user plane function network element.
2. The first network element determines, based on the first information, whether to transmit the buffered downlink information. The first network element transmits the buffered downlink information in at least one of the following cases: the terminal device is configured with small data transmission; an information type of the downlink information belongs to one of signaling and data corresponding to a first information type; an extended discontinuous reception cycle represented by an extended discontinuous reception cycle parameter configured for the terminal device is greater than or equal to a preset cycle; a data size of information belonging to the first information type in the downlink information is less than or equal to a data threshold represented by threshold information; a second protocol data unit session identifier corresponding to the information belonging to the first information type in the downlink information is consistent with the first protocol data unit session identifier; and a second quality of service flow identifier corresponding to the information belonging to the first information type in the downlink information is consistent with the first quality of service flow identifier.
3. The first network element determines to transmit the buffered downlink information, and the first network element transmits, to the base station based on the first information, the downlink information corresponding to the small data transmission.
4. The base station sends, to the terminal device through small data transmission, the downlink information transmitted by the first network element.

The following is still another data transmission method shown in an embodiment of the present disclosure, and the method includes the following step(s).
1. The first network element sends the second information to the base station by using a second message. The second message may be a control plane message or a user plane message, where the control plane message may be a next-generation application protocol message, the user plane message may be a general packet radio service (GPRS) tunneling protocol-user plane (GTP-U) message, and a packet header of the user plane message carries the second information. The second information may include at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information. The first network element is one of an access and mobility management function network element, a session management function network element, and a user plane function network element.
2. The base station determines, based on the second information, whether to send the third information to the first network element. The third information is used for notifying the core network device that the terminal device is capable of receiving downlink information, and the downlink information includes signaling and/or data buffered by the core network device for performing the core network based mobile terminated communication.
3. The base station determines to send the third information, and the base station sends the third information to the core network device. The third information may include at least one of the following: third indication information for notifying the core network device that the terminal device is capable of receiving the downlink information; a third information type corresponding to the downlink information that the terminal device is capable of receiving; a fourth protocol data unit session identifier corresponding to the downlink information that the terminal device is capable of receiving; and a fourth quality of service flow identifier corresponding to the downlink information that the terminal device is capable of receiving.
4. The first network element determines, based on the third information, whether to transmit downlink information corresponding to small data transmission.
5. The first network element determines to transmit the buffered downlink information, and the first network element transmits, to the base station based on the third information, the downlink information corresponding to the small data transmission.
6. The base station sends, to the terminal device through small data transmission, the downlink information transmitted by the first network element.

It should be noted that multiple embodiments or features separated by "or" will not affect other solutions even if some of the features are not implementable. In addition, in the case of no contradiction, the embodiments of the present disclosure may be combined with the embodiments or implementations involved in other data transmission methods and various optional solutions thereof, which will not be repeated here.

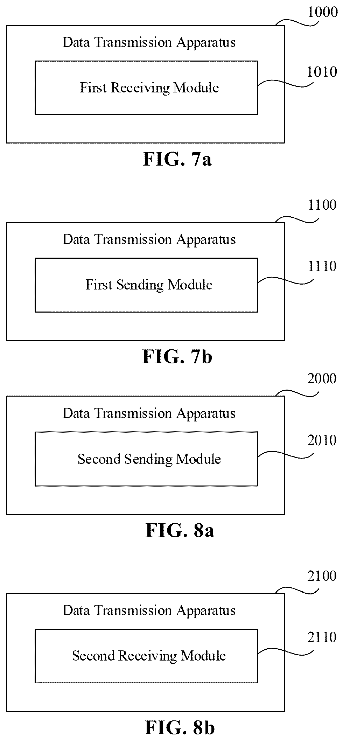

FIG. 7a is a block diagram of a data transmission apparatus 1000 according to an embodiment of the present disclosure. As shown in FIG. 7a, the data transmission apparatus 1000 may be used in a core network device, and the apparatus 1000 may include:
a first receiving module 1010, configured to receive first information sent by an access network device.

The first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit (PDU) session identifier corresponding to small data transmission configured for the terminal device; and a first quality of service flow identifier corresponding to small data transmission configured for the terminal device.

In some embodiments, the first receiving module 1010 is configured to receive a first message sent by an access network device, where the first message carries first information.

In some embodiments, the first receiving module 1010 is configured to receive a control plane message sent by an access network device.

In some embodiments, the first receiving module 1010 is configured to receive a user plane message sent by an access network device.

In some embodiments, the first receiving module 1010 is configured to receive an inactive state transition report message of the terminal device sent by the access network device. In some embodiments, the inactive state transition report message is sent after the access network device switches the terminal device to the inactive state.

In some embodiments, the apparatus 1000 further includes:
a first determining module, configured to determine, based on the first information, whether to transmit the buffered downlink information.

In some embodiments, the downlink information includes signaling and/or data buffered for performing the core network based mobile terminated communication.

In some embodiments, the first determining module is configured to determine, based on first indication information, that the terminal device is configured with small data transmission, and transmit downlink information corresponding to the small data transmission.

In some embodiments, the first determining module is configured to transmit downlink information corresponding to the small data transmission when information in the downlink information belongs to a first information type.

In some embodiments, the first determining module is configured to transmit the downlink information corresponding to the small data transmission when an extended discontinuous reception cycle represented by an extended discontinuous reception cycle parameter is greater than or equal to a preset cycle.

In some embodiments, the first determining module is configured to transmit the downlink information corresponding to the small data transmission when a data size of information belonging to the first information type in the downlink information is less than or equal to a data threshold represented by the threshold information.

In some embodiments, the first determining module is configured to transmit the downlink information corresponding to the small data transmission when a second protocol data unit session identifier corresponding to the information belonging to the first information type in the downlink information is consistent with a first protocol data unit session identifier, and/or a second quality of service flow identifier corresponding to the information belonging to the first information type in the downlink information is consistent with a first quality of service flow identifier.

In some embodiments, the apparatus 1000 further includes:
a first transmission module, configured to transmit downlink information corresponding to small data transmission to the access network device based on the first information.

FIG. 7b is a block diagram of another data transmission apparatus 1100 according to an embodiment of the present disclosure. As shown in FIG. 7b, the data transmission apparatus 1100 may be used in a core network device, and the apparatus 1100 may include:
a first sending module 1110, configured to send second information to an access network device.

The second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the first sending module 1110 is configured to send a second message to the access network device, where the second message carries the second information.

In some embodiments, the first sending module 1110 is configured to send a control plane message to the access network device.

In some embodiments, the first sending module 1110 is configured to send a user plane message to the access network device.

In some embodiments, the apparatus 1100 further includes:
a third receiving module, configured to receive third information sent by the access network device.

In some embodiments, the third information includes at least one of the following: third indication information for notifying the core network device that the terminal device is capable of receiving the downlink information; a third information type corresponding to the downlink information that the terminal device is capable of receiving; a fourth protocol data unit session identifier corresponding to the downlink information that the terminal device is capable of receiving; and a fourth quality of service flow identifier corresponding to the downlink information that the terminal device is capable of receiving.

In some embodiments, the apparatus 1100 further includes:
a second determining module, configured to determine, based on the third information, whether to transmit downlink information corresponding to the small data transmission.

In some embodiments, the apparatus 1100 further includes:
a second transmission module, configured to transmit downlink information corresponding to small data transmission to the access network device based on the third information.

FIG. 8a is a block diagram of another data transmission apparatus 2000 according to an embodiment of the present disclosure. As shown in FIG. 8a, the data transmission apparatus 2000 may be used in an access network device, and the apparatus 2000 may include:
a second sending module 2010, configured to send first information to a core network device.

The first information is related to configuration status of small data transmission of the terminal device.

In some embodiments, the first information includes at least one of the following: first indication information indicating whether the terminal device is configured with small data transmission; a first information type corresponding to small data transmission configured for the terminal device; an extended discontinuous reception cycle parameter configured for the terminal device; threshold information corresponding to small data transmission configured for the terminal device; a first protocol data unit (PDU) session identifier corresponding to small data transmission configured for the terminal device; and a first quality of service flow identifier corresponding to small data transmission configured for the terminal device.

In some embodiments, the second sending module 2010 is configured to send a first message to the core network device, where the first message carries the first information.

In some embodiments, the second sending module 2010 is configured to send a control plane message to the core network device.

In some embodiments, the second sending module 2010 is configured to send a user plane message to the core network device.

In some embodiments, the second sending module 2010 is configured to send an inactive state transition report message of the terminal device to the core network device.

In some embodiments, the inactive state transition report message is sent after the access network device switches the terminal device to the inactive state.

In some embodiments, the apparatus 2000 further includes:
a fourth receiving module, configured to receive downlink information corresponding to small data transmission and transmitted by the core network device based on the first information.

In some embodiments, the apparatus 2000 further includes:
a third sending module, configured to send the downlink information transmitted by the core network device to the terminal device through small data transmission.

FIG. 8b is a block diagram of still another data transmission apparatus 2100 according to an embodiment of the present disclosure. As shown in FIG. 8b, the data transmission apparatus 2100 may be used in an access network device, and the apparatus 2100 may include:
a second receiving module 2110, configured to receive second information sent by the core network device.

The second information is related to core network based mobile terminated communication.

In some embodiments, the second information includes at least one of the following: second indication information indicating a buffer start; a second information type corresponding to the buffered downlink information; time information corresponding to the buffered downlink information; a data size corresponding to the buffered downlink information; a third protocol data unit session identifier corresponding to the buffered downlink information; and a third quality of service flow identifier corresponding to the buffered downlink information.

In some embodiments, the second receiving module 2110 is configured to receive a second message sent by the core network device, where the second message carries the second information.

In some embodiments, the second receiving module 2110 is configured to receive a control plane message sent by the core network device.

In some embodiments, the second receiving module 2110 is configured to receive a user plane message sent by the core network device.

In some embodiments, the apparatus 2100 further includes:
a third determining module, configured to determine, based on the second information, whether to send the third information to the core network device.

The third information is used for notifying the core network device that the terminal device is capable of receiving downlink information, and the downlink information includes signaling and/or data buffered by the core network device for performing the core network based mobile terminated communication.

In some embodiments, the apparatus 2100 further includes:
a first generating module, configured to generate third information based on the second information.

In some embodiments, the third information includes at least one of the following: third indication information for notifying the core network device that the terminal device is capable of receiving the downlink information; a third information type corresponding to the downlink information that the terminal device is capable of receiving; a fourth protocol data unit session identifier corresponding to the downlink information that the terminal device is capable of receiving; and a fourth quality of service flow identifier corresponding to the downlink information that the terminal device is capable of receiving.

A fourth sending module is configured to send third information to the core network device.

In some embodiments, the apparatus 2100 further includes:
a fifth receiving module, configured to receive downlink information corresponding to small data transmission and transmitted by the core network device based on the third information.

A fifth sending module is configured to send the downlink information transmitted by the core network device to the terminal device through small data transmission.

It should be understood that division of the units in the foregoing apparatus is merely logical function division, and in actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores computer instructions, and the processor invokes the computer instructions stored in the memory, to implement any one of the foregoing methods or implement functions of the units in the foregoing apparatus. The processor is, for example, a general-purpose processor, such as a central processing unit (CPU)) or a microprocessor, and the memory is a memory in the apparatus or a memory outside the apparatus. Alternatively, the units in the apparatus may be implemented in a form of a hardware circuit, and some or all functions of the units may be implemented by designing the hardware circuit, and the hardware circuit may be understood as one or more processors. For example, in an implementation, the hardware circuit is an application-specific integrated circuit (ASIC), and functions of some or all the units are implemented by designing a logical relationship between elements in the circuit. For another implementation, the hardware circuit may be implemented by using a programmable logic device (PLD). By using a field programmable gate array (FPGA) as an example, the hardware circuit may include a large quantity of logic gate circuits, and a connection relationship between the logic gate circuits is configured by using a configuration file, to implement functions of some or all the units. All units of the foregoing apparatus may be implemented in a form of software invoked by a processor, or may be implemented in a form of a hardware circuit, or may be partially implemented in a form of software invoked by a processor, while a remaining part is implemented in a form of a hardware circuit.

In some embodiments of the present disclosure, the processor is a circuit having a signal processing capability. In an implementation, the processor may be a circuit having an instruction reading and running capability, for example, a central processing unit (CPU), a microprocessor, a graphics processing unit (GPU, which may be understood as a microprocessor), or a digital signal processor (DSP). In another implementation, the processor may implement a specific function by using a logical relationship of a hardware circuit, and the logical relationship of the hardware circuit is fixed or reconfigurable. For example, the processor is a hardware circuit implemented by an application-specific integrated circuit (ASIC) or a programmable logic device (PLD), for example, an FPGA. In a reconfigurable hardware circuit, a process in which the processor loads a configuration document to implement configuration of the hardware circuit may be understood as a process in which the processor loads instructions to implement functions of some or all of the foregoing units. In addition, it can also be a hardware circuit designed for artificial intelligence, which can be understood as a ASIC, such as a Neural Network Processing Unit (NPU), a Tensor Processing Unit (TPU), a Deep learning Processing Unit (DPU), and the like.

The present disclosure further provides a computer-readable storage medium having computer program instructions stored thereon, the program instructions, when executed by a processor, implementing the steps of the data transmission method provided by the present disclosure.

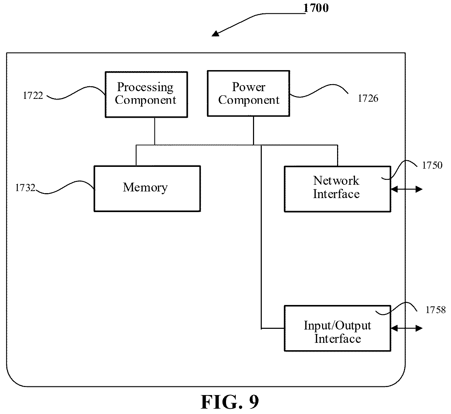

FIG. 9 is a block diagram illustrating a communication device according to an embodiment of the present disclosure. The communication device is the network device 1700, for example, the network device 1700 may be provided as another network logical entity in a core network or an access network. Referring to FIG. 17, the network device 1700 includes a processing component 1722, which further includes one or more processors, and memory resources represented by a memory 1732 for storing instructions executable by the processing component 1722, such as application programs. The application program stored in the memory 1732 may include one or more modules each corresponding to a set of instructions. In addition, the processing component 1722 is configured to execute instructions to perform the steps of the communication method provided by the above method embodiments.

The network device 1700 may further include a power component 1726 configured to perform power management of the apparatus 1700, a wired or wireless network interface 1750 configured to connect the network device 1700 to a network, and an input/output interface 1758. Network device 1700 may operate based on an operating system stored in memory 1732, such as Windows Server^{™}, Mac OS X^{™}, Unix^{™}, Linux^{™}, Free BSD^{™}, or the like.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the disclosure being indicated by the following claims.

It should be understood that the present disclosure is not limited to the precise structures described above and shown in the drawings, and various modifications and changes may be made without departing from the scope thereof. The scope of the present disclosure is limited only by the appended claims.

## Claims

1. A data transmission method, performed by a core network device, wherein the method comprises:
receiving first information sent by an access network device, wherein the first information is related to configuration status of small data transmission of a terminal device; or
sending second information to the access network device, wherein the second information is related to core network based mobile terminated communication.

2. The method according to claim **1,** further comprising:
determining, based on the first information, whether to transmit buffered downlink information, wherein the downlink information comprises signaling and/or data buffered for performing the core network based mobile terminated communication.

3. The method according to claim 2, wherein the first information comprises at least one of following:
first indication information indicating whether the terminal device is configured with small data transmission;
a first information type corresponding to small data transmission configured for the terminal device;
an extended discontinuous reception cycle parameter configured for the terminal device;
threshold information corresponding to small data transmission configured for the terminal device;
a first protocol data unit session identifier corresponding to small data transmission configured for the terminal device;
a first quality of service flow identifier corresponding to small data transmission configured for the terminal device.

4. The method according to claim 3, wherein determining, based on the first information, whether to transmit the buffered downlink information comprises:
determining, based on the first indication information, that the terminal device is configured with the small data transmission, and transmitting the downlink information corresponding to the small data transmission.

5. The method according to claim 3 or 4, wherein determining, based on the first information, whether to transmit the buffered downlink information comprises:
information in the downlink information belongs to the first information type, transmitting the downlink information corresponding to the small data transmission.

6. The method according to claim 5, wherein determining, based on the first information, whether to transmit the buffered downlink information comprises:
an extended discontinuous reception cycle represented by the extended discontinuous reception cycle parameter is greater than or equal to a preset cycle, transmitting the downlink information corresponding to the small data transmission.

7. The method according to claim 5 or 6, wherein determining, based on the first information, whether to transmit the buffered downlink information comprises:
a data size of information of the first information type in the downlink information is less than or equal to a data threshold represented by the threshold information, transmitting the downlink information corresponding to the small data transmission.

8. The method according to claims 5-7, wherein determining, based on the first information, whether to transmit the buffered downlink information comprises:
a second protocol data unit session identifier corresponding to information of the first information type in the downlink information is consistent with the first protocol data unit session identifier, and/or a second quality of service flow identifier corresponding to the information of the first information type in the downlink information is consistent with the first quality of service flow identifier, transmitting the downlink information corresponding to the small data transmission.

9. The method according to any one of claims 1-8, wherein receiving the first information sent by the access network device comprises:
receiving a first message sent by the access network device, wherein the first message carries the first information.

10. The method according to claim 9, wherein receiving the first message sent by the access network device comprises:
receiving a control plane message sent by the access network device.

11. The method according to claim 9, wherein receiving the first message sent by the access network device comprises:
receiving a user plane message sent by the access network device.

12. The method according to any one of claims 9-11, wherein receiving the first message sent by the access network device comprises:
receiving an inactive state transition report message of the terminal device sent by the access network device.

13. The method according to claim 12, wherein the inactive state transition report message is sent after the access network device switches the terminal device to an inactive state.

14. The method according to any one of claims 2-13, further comprising:
determining to transmit the buffered downlink information, and transmitting, to the access network device based on the first information, the downlink information corresponding to the small data transmission.

15. The method according to claim 1, wherein the second information comprises at least one of following:
second indication information indicating a buffer start;
a second information type corresponding to the buffered downlink information;
time information corresponding to the buffered downlink information;
a data size corresponding to the buffered downlink information;
a third protocol data unit session identifier corresponding to the buffered downlink information;
a third quality of service flow identifier corresponding to the buffered downlink information.

16. The method according to claim 1 or 15, wherein sending the second information to the access network device comprises:
sending a second message to the access network device, wherein the second message carries the second information.

17. The method according to claim 16, wherein sending the second message to the access network device comprises:
sending a control plane message to the access network device.

18. The method according to claim 16, wherein sending the second message to the access network device comprises:
sending a user plane message to the access network device.

19. The method according to any one of claims 1 and 15-18, further comprising:
receiving third information sent by the access network device; and
determining, based on the third information, whether to transmit the downlink information corresponding to the small data transmission.

20. The method according to claim 19, wherein the third information comprises at least one of following:
third indication information for notifying the core network device that the terminal device is capable of receiving the downlink information;
a third information type corresponding to the downlink information that the terminal device is capable of receiving;
a fourth protocol data unit session identifier corresponding to the downlink information that the terminal device is capable of receiving;
a fourth quality of service flow identifier corresponding to the downlink information that the terminal device is capable of receiving.

21. The method according to claim 19 or 20, further comprising:
determining to transmit the downlink information corresponding to the small data transmission, and transmitting, based on the third information, the downlink information corresponding to the small data transmission to the access network device.

22. A data transmission method, performed by an access network device, wherein the method comprises:
sending first information to a core network device, wherein the first information is related to configuration status of small data transmission of a terminal device; or
receiving second information sent by the core network device, wherein the second information is related to core network based mobile terminated communication.

23. The method according to claim 22, wherein the first information comprises at least one of following:
first indication information indicating whether the terminal device is configured with small data transmission;
a first information type corresponding to small data transmission configured for the terminal device;
an extended discontinuous reception cycle parameter configured for the terminal device;
threshold information corresponding to small data transmission configured for the terminal device;
a first protocol data unit session identifier corresponding to small data transmission configured for the terminal device;
a first quality of service flow identifier corresponding to small data transmission configured for the terminal device.

24. The method according to claim 22 or 23, wherein sending the first information to the core network device comprises:
sending a first message to the core network device, wherein the first message carries the first information.

25. The method according to claim 24, wherein sending the first message to the core network device comprises:
sending a control plane message to the core network device.

26. The method according to claim 24, wherein sending the first message to the core network device comprises:
sending a user plane message to the core network device.

27. The method according to any one of claims 24-26, wherein sending the first message to the core network device comprises:
sending an inactive state transition report message of the terminal device to the core network device.

28. The method according to claim 27, wherein sending the inactive state transition report message of the terminal device to the core network device comprises:
switching the terminal device to an inactive state, and sending the inactive state transition report message to the core network device.

29. The method according to any one of claims 22-28, further comprising:
receiving the downlink information corresponding to the small data transmission and transmitted by the core network device based on the first information.

30. The method according to claim 29, further comprising:
sending the downlink information transmitted by the core network device to the terminal device through small data transmission.

31. The method according to claim 22, further comprising:
determining, based on the second information, whether to send third information to the core network device, wherein the third information is used for notifying the core network device that the terminal device is capable of receiving downlink information, and the downlink information comprises signaling and/or data buffered by the core network device for performing the core network based mobile terminated communication.

32. The method according to claim 31, wherein the second information comprises at least one of following:
second indication information indicating a buffer start;
a second information type corresponding to the buffered downlink information;
time information corresponding to the buffered downlink information;
a data size corresponding to the buffered downlink information;
a third protocol data unit session identifier corresponding to the buffered downlink information;
a third quality of service flow identifier corresponding to the buffered downlink information.

33. The method according to any one of claims 22, 31, 32, wherein receiving the second information sent by the core network device comprises:
receiving a second message sent by the core network device, wherein the second message carries the second information.

34. The method according to claim 33, wherein receiving the second message sent by the core network device comprises:
receiving a control plane message sent by the core network device.

35. The method according to claim 33, wherein receiving the second message sent by the core network device comprises:
receiving a user plane message sent by the core network device.

36. The method according to any one of claims 31-35, further comprising:
determining to send the third information to the core network device, and generating the third information based on the second information; and
sending the third information to the core network device.

37. The method according to claim 36, wherein the third information comprises at least one of following:
third indication information for notifying the core network device that the terminal device is capable of receiving the downlink information;
a third information type corresponding to the downlink information that the terminal device is capable of receiving;
a fourth protocol data unit session identifier corresponding to the downlink information that the terminal device is capable of receiving;
a fourth quality of service flow identifier corresponding to the downlink information that the terminal device is capable of receiving.

38. The method according to claim 36 or 37, further comprising:
receiving the downlink information corresponding to the small data transmission and transmitted by the core network device based on the third information.

39. The method according to claim 38, further comprising:
sending the downlink information transmitted by the core network device to the terminal device through small data transmission.

40. A data transmission method, performed by a communication system, wherein the communication system comprises an access network device, a core network device, and a terminal device, and the method comprises:
sending, by the access network device, a first message to the core network device, and receiving, by the core network device, the first information, wherein the first information is related to configuration status of small data transmission of the terminal device; or
sending, by the core network device, second information to the access network device, and receiving, by the access network device, the second information, wherein the second information is related to core network based mobile terminated communication.

41. A data transmission apparatus, comprising:
a first receiving module, configured to receive first information sent by an access network device, wherein the first information is related to configuration status of small data transmission of a terminal device; or
wherein the apparatus comprises:
a first sending module, configured to send second information to the access network device, wherein the second information is related to core network based mobile terminated communication.

42. A data transmission apparatus, comprising:
a second sending module, configured to send first information to a core network device, wherein the first information is related to configuration status of small data transmission of a terminal device; or
wherein the apparatus comprises:
a second receiving module, configured to receive second information sent by the core network device, wherein the second information is related to core network based mobile terminated communication.

43. A communication device, comprising:
one or more processors;
wherein the processor is configured to invoke computer instructions to cause the communication device to implement the data transmission method according to any one of claims 1-39.

44. A communication system, comprising an access network device and a core network device, wherein the access network device is configured to implement the data transmission method according to any one of claims 1-21, and the core network device is configured to implement the data transmission method according to any one of claims 22-39.

45. A computer-readable storage medium, wherein the computer-readable storage medium stores computer instructions, and when the computer instructions are executed on a communication device, the communication device is caused to implement the data transmission method according to any one of claims 1-39.
